# EUROPÄISCHE PATENTSCHRIFT

(11) **EP 2 815 051 B1**
(45) Veröffentlichungstag und Bekanntmachung des Hinweises auf die Patenterteilung: **10.01.2018**
(21) Anmeldenummer: 12787650.6
(22) Anmeldetag: 02.11.2012
(51) Int. Cl.: E05F 11/38, F16C 11/06

(54) **LAGERANORDNUNG FÜR EINE VERSTELLVORRICHTUNG EINES KRAFTFAHRZEUGS**
BEARING ARRANGEMENT FOR AN ADJUSTMENT DEVICE IN A MOTOR VEHICLE
ENSEMBLE D'APPUI POUR UN DISPOSITIF DE RÉGLAGE D'UN VÉHICULE AUTOMOBILE

(30) Priorität: 04.11.2011 DE 102011085743; 29.05.2012 DE 102012104626
(43) Veröffentlichungstag der Anmeldung: 24.12.2014
(73) Patentinhaber: Brose Fahrzeugteile GmbH & Co. Kommanditgesellschaft, Bamberg, 96052 Bamberg (DE)
(72) Erfinder: HÜLSEBUCH, Thomas, 96175 Pettstadt (DE); BERNARD, Pierre-Dominique, 96190 Untermerzbach (DE)
(74) Vertreter: Maikowski & Ninnemann Patentanwälte Partnerschaft mbB
(86) Internationale Anmeldenummer: PCT/EP2012/004562
(87) Internationale Veröffentlichungsnummer: WO 2013/064255

(56) Entgegenhaltungen:
- EP-A1- 0 413 623
- EP-A1- 0 801 238
- WO-A1-2010/003841
- WO-A2-2004/020770
- DE-A1- 2 624 028
- DE-A1- 19 824 530
- DE-U1-202009 005 817
- US-A- 3 216 759

## Beschreibung

Die Erfindung betrifft eine Lageranordnung für eine Verstellvorrichtung eines Kraftfahrzeugs nach dem Oberbegriff des Anspruchs 1, insbesondere für eine bahngesteuerte Verstellvorrichtung für eine Fensterscheibe eines Kraftfahrzeugs.

Eine bahngesteuerte Verstellvorrichtung für eine Fensterscheibe, auch bahngesteuerter Fensterheber genannt, umfasst eine Trägerbaugruppe, an der mehrere (insbesondere drei) Führungsbahnen vorgesehen sind, die einen Verstellweg für eine verstellbare Fensterscheibe definieren und die quer zu dem Verstellweg voneinander beabstandet sind. Die Trägerbaugruppe kann dabei ein- oder mehrteilig ausgeführt sein und insbesondere zum Einbau in eine Kraftfahrzeugtür eingerichtet sein, welche eine mittels eines Fensterhebers zu verstellende Fensterscheibe enthält.

Zur Führung einer verstellbaren Fensterscheibe entlang des durch die Führungsbahnen definierten Verstellweges dient vorliegend ein Mitnehmer, der einerseits Mittel zur Anbindung der zu verstellenden Fensterscheibe aufweist und der andererseits mit Führungselementen versehen ist, derart, dass mit jeder der trägerseitigen Führungsbahnen jeweils mindestens ein Führungselement des Mitnehmers - entlang der zugehörigen Führungsbahn beweglich - in Eingriff steht.

Indem ein derartiger Mitnehmer, wie bekannt, mit einem Fensterheberantrieb gekoppelt wird, z. B. - im Fall eines sogenannten Seilfensterhebers - über ein flexibles Zugmittel, welches mit dem Mitnehmer verbunden ist, mit einem manuellen oder motorischen Antrieb gekoppelt wird, kann der Mitnehmer - durch die trägerseitigen Führungsbahnen geführt - entlang des durch jene Führungsbahnen definierten Verstellweges bewegt werden. Hierbei wird die am Mitnehmer angebundene, zu verstellende Fensterscheibe mitgenommen, um eine zugehörige Fensteröffnung, je nach Bewegungsrichtung der Scheibe, freizugeben oder zu verschließen.

Bahngesteuerte Fensterheber werden unter anderem zum Verstellen von Fensterscheiben für rahmenlose Türen eines Kraftfahrzeugs, z.B. bei Cabriolets, eingesetzt. Neben der Definition einer Hauptverstellrichtung in Abzugsrichtung der Fensterscheibe, d. h. im Wesentlichen der vertikalen Fahrzeugachse (z-Achse), dienen die Führungsbahnen üblicherweise zur Führung des Mitnehmers sowie der hieran angebundenen Fensterscheibe mit einer Bewegungskomponente entlang der horizontalen Fahrzeugquerachse (y-Achse), also senkrecht sowohl zur vertikalen Fahrzeugachse (z-Achse) als auch zur Fahrzeuglängsachse (x-Achse). Die Führung der Fensterscheibe mit einer Komponente entlang der horizontalen Fahrzeugquerachse (und damit senkrecht zu der Ebene, welche von der Tür aufgespannt wird, in die der Fensterheber einzubauen ist) kann genutzt werden, um beim Schließen der Fensteröffnung die Fensterscheibe nach innen gegen eine karosserieseitige Dichtung zu drücken und so ein sicheres Verschließen der Fensteröffnung zu gewährleisten. Zudem können dem Mitnehmer und der hieran angebundenen Fensterscheibe durch die Führungsbahnen auch Bewegungskomponenten entlang der Fahrzeuglängsachse (x-Achse) aufgezwungen werden, so dass sich komplexe Verstellbewegungen realisieren lassen, die eine Anpassung an unterschiedlichste Bauformen von Kraftfahrzeugtüren ermöglichen.

Hierbei besteht allerdings das Problem, dass ein System, bei dem ein Mitnehmer in mehreren voneinander beabstandeten, separaten Führungsbahnen geführt wird, überbestimmt ist. Fertigungstoleranzen könnten in einem solchen System zum Verklemmen des Mitnehmers führen.

Bei einem aus der DE 10 2008 032 961 A1 bekannten Bahnfensterheber ist daher gemäß Figur 12 jener Offenlegungsschrift vorgesehen, eines der drei Führungselemente eines Mitnehmers so auszugestalten, dass ein Führungsschlitz, über den das Führungselement mit der zugehörigen Führungsbahn in Eingriff steht, entlang der Fahrzeuglängsachse (x-Achse) offen ist. Hierdurch lassen sich Toleranzen ausgleichen und ein Verklemmen des Mitnehmers bei einer Bewegung entlang des durch die drei Führungsbahnen definierten Verstellweges verhindern. Allerdings ist die verschiebliche Lagerung des Mitnehmers an den Führungsbahnen dann nicht mehr drehsteif.

Es wird deshalb vorliegend vorgeschlagen, den Mitnehmer über eine Lageranordnung derart mit zugehörigen Führungselementen zu verbinden, dass mittels dieser Lageranordnung ein erforderlicher Toleranzausgleich definiert ermöglicht wird.

Die WO 2004/020770 A2 offenbart einen Mitnehmer für einen bahngesteuerten Fensterheber, bei dem ein Führungselement mit dem Mitnehmer über ein Lagerelement einer Kugelkopf-Lagerung gelenkig verbunden ist. Mittels eines Federclips oder einer Tellerfeder wird das Lagerelement formschlüssig in einem Lagerbereich des Führungselementes gehalten.

In der US 3 216 759 A ist eine Führungseinrichtung für einen bahngesteuerten Fensterheber mit einem Mitnehmer beschrieben. Ein Führungselement für eine Fensterscheibe ist über ein Lagerelement mit dem Mitnehmer gelenkig verbunden. Das Lagerelement wird mittels eines Sicherungselementes in Form einer Blattfeder in einem Lagerbereich gesichert.

Die DE 26 24 028 A1 beschreibt eine Führungsvorrichtung für eine bewegbare Scheibe mit einem Mitnehmer, bei dem ein Führungselement mit dem Mitnehmer über ein Lagerelement gelenkig verbunden ist und in einem Lagerbereich formschlüssig gehalten wird. Nachdem das Lagerelement in dem Lagerbereich eingesetzt wurde, wird ein Sicherungselement in Form eines E-Ringes, einer Bandklammer oder einer anderen Klemmeinrichtung an dem Lagerbereich angebracht, so dass das Lagerelement in dem Lagerbereich festgehalten wird.

Es besteht das Problem, das für die Lageranordnung verwendete Lagerelement definiert zu sichern, ohne die Montage zu erschweren.

Dieses Problem wird erfindungsgemäß durch die Schaffung einer Lageranordnung mit den Merkmalen des Anspruchs 1 gelöst.

Danach umfasst die Lageranordnung ein in einem Lagerbereich gelagertes Lagerelement, welches durch ein im Wesentlichen U-förmiges Sicherungselement formschlüssig in dem Lagerbereich gehalten wird, wobei das Sicherungselement formschlüssig mit dem Lagerelement zusammenwirkt. Das Sicherungselement wird derart am Lagerbereich angeordnet, dass es im Einführweg des Lagerelementes in den Lagerbereich liegt und somit beim Einführen des Lagerelementes in den Lagerbereich zumindest abschnittsweise abgespreizt bzw. weggedrückt wird, insbesondere durch einen Lagerkopf des Lagerelementes, um ein bestimmungsgemäßes Einführen des Lagerelementes in den Lagerbereich zu ermöglichen. Das Sicherungselement tritt formschlüssig mit dem Lagerelement in Eingriff, indem der aufgespreizte bzw. weggedrückte Abschnitt des Sicherungselementes zurückschnappt und hierbei mit dem Lagerelement in Eingriff tritt, beispielsweise mit einem hierfür vorgesehenen Formschlussbereich des Lagerelementes, der insbesondere als Aussparung ausgeführt sein kann. Hierdurch wird eine so genannte selbsttätige Montage des Lagerelementes ermöglicht. Das heißt, zum Einbau des Lagerelementes in den Lagerbereich ist es lediglich erforderlich, das Lagerelement bestimmungsgemäß in den Lagerbereich einzufügen. Der formschlüssige Eingriff des Sicherungselementes in das Lagerelement erfolgt hierbei selbsttätig.
Dem Sicherungselement ist ein Verriegelungselement zugeordnet, mit dem das Sicherungselement in der Position verriegelbar ist, in der es formschlüssig mit dem Lagerelement in Eingriff steht. Das Verriegelungselement wirkt einem außer Eingriff geraten des Sicherungselementes und des Lagerelementes entgegen. Das Verriegelungselement ist derart ausgebildet und derart im Lagerbereich angeordnet, dass dieses beim Einführen des Lagerelementes in den Lagerbereich zunächst noch ein lokales Aufspreizen bzw. Wegdrücken des Sicherungselementes gestattet und dass beim weiteren Einführen des Lagerelementes in den Lagerbereich das Verriegelungselement lokal deformiert und/oder bewegt wird, so dass es schließlich das Sicherungselement verriegelt, wenn dieses formschlüssig mit dem Lagerelement in Eingriff steht.
Das Sicherungselement ist dabei vorteilhaft ein zusätzliches Element, welches durch mindestens ein von dem Lagerelement (und insbesondere allgemein dem Führungselement) verschiedenes Bauteil gebildet wird.
Das Sicherungselement kann insbesondere derart ausgeführt und bezüglich des Lagerelementes angeordnet sein, dass im Betrieb der Verstellvorrichtung an dem Mitnehmer wirkende und auf das Lagerelement übertragene Kräfte nicht dazu führen, dass das Lagerelement aus dem Lagerbereich ausgehoben wird. Hierzu trägt insbesondere der formschlüssige Eingriff des Sicherungselementes in das Lagerelement bei.

Das im Wesentlichen U-förmig ausgeführte Sicherungselement weist eine Basis sowie zwei von der Basis abstehende Schenkel auf, die mit dem Lagerelement in Eingriff bringbar sind, wodurch ein Einführen des Lagerelementes in den Lagerbereich unter teilweisem Aufspreizen bzw. Wegdrücken des bereits vormontierten, im Einführweg des Lagerelementes befindlichen Sicherungselementes ermöglicht wird.

Weiterhin kann das Sicherungselement auch unmittelbar in den Lagerbereich integriert sein, z. B. einstückig an diesem angeformt oder fest mit diesem verbunden sein, auch durch Umspritzen.

Weitere Einzelheiten und Vorteile der Erfindung werden in der nachfolgenden Beschreibung von Ausführungsbeispielen anhand der Figuren deutlich werden.

Es zeigen:
- Fig. 1A: eine Vorderansicht einer Trägerbaugruppe mit einer bahngesteuerten Vorrichtung zur Verstellung einer Fensterscheibe eines Kraftfahrzeuges, wobei ein die Fensterscheibe tragender Mitnehmer in drei Führungsbahnen geführt ist;
- Fig. 1B: eine Rückansicht der Anordnung aus Figur 1A;
- Fig. 2A: eine erste perspektivische Ansicht der Anordnung aus den Figuren 1A und 1B;
- Fig. 2B: eine zweite perspektivische Ansicht der Anordnung aus den Figuren 1A und 1B, jedoch ohne Mitnehmer;
- Fig. 3: eine perspektivische Ansicht eines Ausschnittes der Anordnung aus den Figuren 1A und 1B;
- Fig. 4A: einen Querschnitt durch die Anordnung aus den Figuren 1A und 1B;
- Fig. 4B: einen Ausschnitt des Querschnittes aus Figur 1A;
- Fig. 5A: ein Detail zum Eingriff eines Führungselementes des Mitnehmers in eine trägerseitige Führungsbahn, wobei dem Führungselement ein Lagerelement zugeordnet ist, über das das Führungselement gelenkig mit dem Mitnehmer verbunden ist;
- Fig. 5B: ein Sicherungselement in Form eines Sicherungsbügels zur Sicherung des Lagerelementes aus Fig. 5A an dem zugehörigen Führungselement;
- Fig. 5C: eine perspektivische Darstellung der Anordnung aus Fig. 5A, anhand der das Einführen des Sicherungselementes illustriert ist;
- Fig. 5D: eine Schnittdarstellung der Anordnung aus Fig. 5A mit eingeführtem Sicherungselement;
- Fig. 6A: eine weitere Vorderansicht der Anordnung aus den Figuren 1A und 1B;
- Fig. 6B: eine weitere Rückansicht der Anordnung aus den Figuren 1A und 1B;
- Fig. 7A: eine weitere perspektivische Ansicht der Anordnung aus den Figuren 1A und 1B, jedoch ohne Mitnehmer;
- Fig. 7B: eine perspektivische Darstellung einer Führungsplatte der Anordnung aus Figur 7A;
- Fig. 8A und 8B: zwei weitere perspektivische Darstellungen der Führungsplatte aus Figur 7B;
- Fig. 9A: eine perspektivische Darstellung einer ersten Abwandlung der Anordnung aus den Fig. 5A bis 5D mit einem Führungselement, an dem ein Sicherungselement vormontiert ist, und einem in das Führungselement einzuführenden Lagerelement, wobei dem Sicherungselement ein zusätzliches Verriegelungselement zugeordnet ist;
- Fig. 9B: eine Querschnittsdarstellung der Anordnung aus Fig. 9A;
- Fig. 9C: eine perspektivische Darstellung des Sicherungselementes aus den Fig. 9A und 9B;
- Fig. 10A: eine perspektivische Darstellung gemäß Fig. 9A beim Einführen des Lagerelementes in das Führungselement;
- Fig. 10B: eine perspektivische Darstellung gemäß Fig. 9B beim Einführen des Lagerelementes in das Führungselement;
- Fig. 11A: eine perspektivische Darstellung gemäß den Figuren 9A und 10A bei eingeführtem Lagerelement;
- Fig. 11B: eine Schnittdarstellung gemäß den Figuren 9B und 10B bei eingeführtem Lagerelement, wobei dem Sicherungselement ein zusätzliches Verriegelungselement zugeordnet ist;
- Fig. 12A, 12B: eine Abwandlung der Anordnung aus den Figuren 9A und 9B hinsichtlich der Ausgestaltung des zusätzlichen Verriegelungselementes;
- Fig. 13A, 13B: die Anordnung aus den Figuren 12A und 12B beim Einführen des Lagerelementes in das Führungselement;
- Fig. 14A, 14B: die Anordnung aus den Figuren 12A und 12B bei vollständig eingeführtem Lagerelement;
- Fig. 15A: eine perspektivische Darstellung einer Abwandlung der Anordnung aus den Figuren 5A bis 5D hinsichtlich der Ausgestaltung des Sicherungselementes;
- Fig. 15B: eine Querschnittsdarstellung der Anordnung aus Fig. 15A;
- Fig. 15C: eine perspektivische Darstellung des Sicherungselementes aus Figur 15A;
- Fig. 16A: eine perspektivische Darstellung einer weiteren Abwandlung der Anordnung aus den Figuren 5A bis 5D hinsichtlich der Ausgestaltung des Sicherungselementes;
- Fig. 16B: eine Querschnittsdarstellung der Anordnung aus Fig. 16A;
- Fig. 16C: eine perspektivische Darstellung des Sicherungselementes aus Fig. 16A;
- Fig. 17A: noch eine weitere Abwandlung der Anordnung aus den Fig. 5A bis 5D hinsichtlich der Ausgestaltung des Sicherungselementes in perspektivischer Darstellung;
- Fig. 17B: ein Querschnitt durch die Anordnung aus Fig. 17A;
- Fig. 17C: das Sicherungselement aus Fig. 17A in perspektivischer Darstellung;
- Fig. 18A: eine perspektivische Darstellung eines Führungselementes mit einstückig angeformten Sicherungselement, einem teilweise eingeführten Lagerelement und einem zugeordneten kronenförmigen Verriegelungselement;
- Fig. 18B: eine Querschnittsdarstellung der Anordnung aus Fig. 18A;
- Fig. 18C: eine perspektivische Darstellung des Verriegelungselementes aus Fig. 18A;
- Fig. 19A: eine Draufsicht auf die Anordnung aus den Figuren 18A und 18B;
- Fig. 19B: eine Detaildarstellung der Anordnung aus den Figuren 18A und 18B;
- Fig. 20A: eine perspektivische Darstellung der Anordnung aus den Fig. 18A und 18B bei vollständig eingeführtem Lagerelement und einem Verriegelungselement, das zur Verriegelung des Sicherungselementes positioniert ist, so dass letzteres das Lagerelement hält;
- Fig. 20B: einen Querschnitt auf die Anordnung aus Fig. 20A;
- Fig. 21A: eine Draufsicht auf die Anordnung aus Fig. 20A;
- Fig. 21B: eine Detaildarstellung der Anordnung aus Fig. 20A;
- Fig. 22A: eine Abwandlung der Anordnung aus den Figuren 5A bis 5D mit einer zusätzlichen Führung für das Sicherungselement in einer ersten perspektivischen Darstellung;
- Fig. 22B: die Anordnung aus Fig. 22A in einer zweiten perspektivischen Darstellung;
- Fig. 22C: eine mögliche alternative Ausgestaltung einer Führung für das Sicherungselement aus den Figuren 22A und 22B.

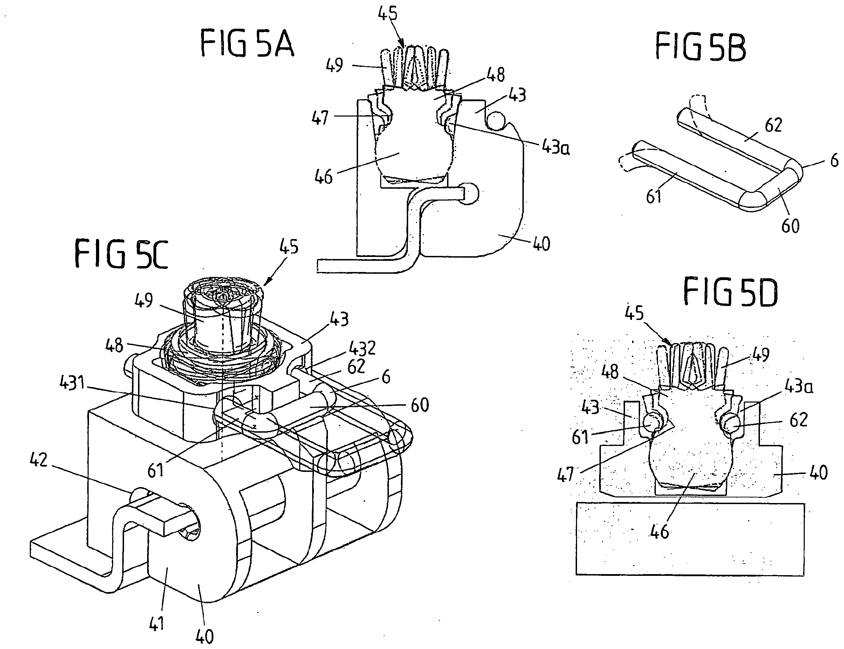

Die Figuren 5A-5D und 15A bis 22C zeigen keine Ausführungsbeispiele der Erfindung, dienen jedoch dem besseren Verständnis der Erfindung.

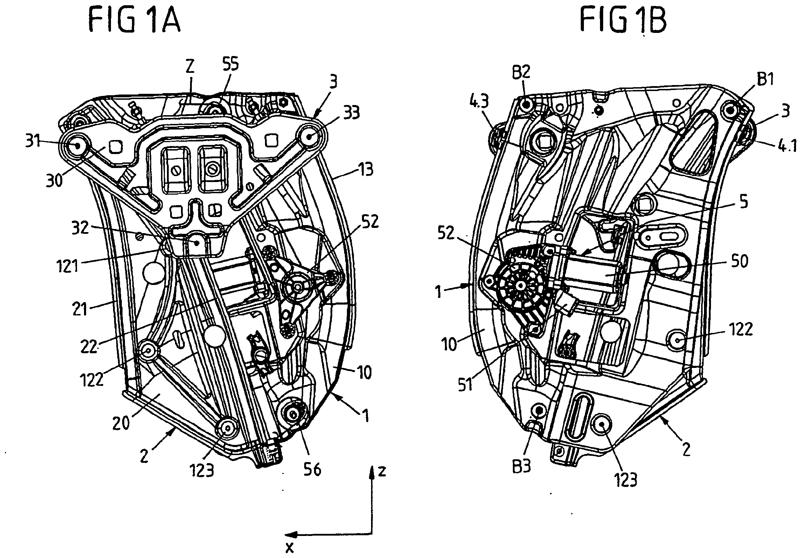

In den Figuren 1A und 1B ist eine Trägerbaugruppe 1, 2 in einer Vorderansicht (Figur 1A) und einer Rückansicht (Figur 1B) dargestellt, die zur Aufnahme einer bahngesteuerten Vorrichtung zur Verstellung einer Fensterscheibe eines Kraftfahrzeugs ausgebildet und vorgesehen ist. Die Trägerbaugruppe 1, 2 umfasst einen Modulträger 1 mit einem (plattenartigen) Grundkörper 10. Dieser kann beispielsweise aus Kunststoff oder auch aus Leichtmetall bestehen und ist zum Einbau in eine Kraftfahrzeugtür eingerichtet, so dass der Modulträger 1 in seinem bestimmungsgemäß in eine Kraftfahrzeugtür eingebauten Zustand einen Teil der Türkarosserie bildet, insbesondere einen Bestandteil der sogenannten Türinnenhaut. Hierzu kann die Fahrzeugtür, insbesondere in ihrer Türinnenhaut, einen großflächigen Ausschnitt aufweisen, der von dem Modulträger 1 überdeckt wird, wenn dieser bestimmungsgemäß in die Kraftfahrzeugtür eingebaut (und an dieser befestigt) ist.
Mit dem Modulträger 1 verbunden bzw. an diesem befestigt ist eine Führungskomponente 2 der Trägerbaugruppe 1, 2 an der zwei Führungsbahnen 21, 22 vorgesehen, im Ausführungsbeispiel einstückig angeformt, sind, die zur Führung eines Mitnehmers 3, hier in Form einer Hebeschiene, dienen, welcher wiederum eine entlang der Führungsbahnen zu verstellende Fensterscheibe trägt. Eine dritte Führungsbahn 13 zur Führung des Mitnehmers 3 ist am Modulträger 1 vorgesehen bzw. dort angeformt.

Die Führungskomponente 2 der Trägerbaugruppe 1, 2 wird derart an dem Modulträger 1 angeordnet und befestigt, dass die Führungskomponente 2 auf dem Modulträger 1 aufliegt. Vorliegend weist jedoch die Führungskomponente 2 - verglichen mit dem Modulträger 1 - eine substantiell kleinere Ausdehnung (entlang der Türebene, bezogen auf den in eine Kraftfahrzeugtür eingebauten Zustand des Modulträgers 1) auf. Hierdurch überdeckt die Führungskomponente 2 den Modulträger 1 nur teilweise; und die modulträgerseitige Führungsbahn 13 ist an einem von der Führungskomponente 2 nicht überdeckten Bereich des Modulträgers 1 vorgesehen.

Die Führungskomponente 2, welche hier einen plattenartigen Grundkörper 20 aufweist, kann aus einem - verglichen mit dem Material des Modulträgers 1 - festeren, steiferen Material bestehen, insbesondere aus Metall oder einem (faser-)verstärkten Kunststoff. An der Führungsplatte 2 sind daher vorteilhaft solche Führungsbahnen 21, 22 angeordnet bzw. angeformt, die im Betrieb der Verstellvorrichtung kräftemäßig besonders stark belastet werden können.

Die Führungskomponente 2 (in Form einer Führungsplatte) sowie der Modulsträger 1 sind an mehreren Befestigungsstellen 121, 122, 123 miteinander verbunden, deren Ausgestaltung weiter unten noch näher beschrieben werden wird. Die Verbindung ist im Ausführungsbeispiel derart, dass eine im Wesentlichen starre Trägerbaugruppe 1, 2 gebildet wird. Diese erstreckt sich aufgrund der plattenartigen Ausgestaltung sowohl des Modulträgers 1 als auch der Führungskomponente 2 sowie aufgrund deren überdeckender Anordnung ebenfalls im Wesentlichen plattenartig, und zwar - bei bestimmungsgemäßem Einbau in eine Kraftfahrzeugtür - im Wesentlichen entlang einer Türebene, z. B. einer durch die Türinnenhaut aufgespannten Ebene.

Der Mitnehmer 3 ist an der Trägerbaugruppe 1, 2 bzw. genauer an den an der Trägerbaugruppe vorgesehenen Führungsbahnen 21, 22, 13 geführt. Hierzu greifen im Ausführungsbeispiel an dem Mitnehmer 3 befestigte Führungselemente in Form von Gleitern 4.1, 4.2, 4.3 in jeweils eine der Führungsbahnen 21, 22, 13 ein, und zwar derart, dass sich der jeweilige Gleiter in der zugehörigen Führungsbahn entlang deren jeweiliger (lokaler) Verlaufsrichtung bewegen bzw. verschieben lässt. Die Führungselemente werden nachfolgend der Einfachheit halber jeweils als Gleiter bezeichnet, womit jedoch keine Einschränkung auf die Ausführung der Führungselemente als Gleiter verbunden sein soll. Vielmehr gelten die nachfolgenden Ausführungen, welche beispielhaft für Führungselemente in Form von Gleitern beschrieben werden, jeweils auch allgemein für beliebige Führungselemente, über die der Mitnehmer 3 mit den Führungsbahnen 21, 22, 13 in Eingriff stehen kann.

Die Führungsbahnen 21, 22, 13, die jeweils an der Führungskomponente 2 bzw. am Modulträger 1 vorgesehen, insbesondere angeformt, sind, verlaufen nicht geradlinig und insbesondere auch nicht parallel zueinander. Vielmehr sind die einzelnen Führungsbahnen 21, 22, 13 in unterschiedlicher Weise (zumindest leicht) gekrümmt, und zwar nicht nur in der Ebene (Türebene bzw. xz-Ebene), entlang der sich die Trägerbaugruppe 1, 2 erstreckt und die durch die Fahrzeuglängsachse x sowie die vertikale Fahrzeugachse z aufgespannt wird, sondern auch mit einer Komponente senkrecht zu jener Ebene, also entlang der horizontalen Fahrzeugquerachse y.

Hierdurch kann der Mitnehmer 3 zum Anheben oder Absenken einer mit dem Mitnehmer 3 in üblicher Weise zu verbindenden Fensterscheibe nicht nur einfach linear entlang einer Raumrichtung, insbesondere der vertikalen Fahrzeugachse z, bewegt werden, sondern er lässt sich entlang komplexerer Bahnen bewegen bzw. verschieben. Dies ermöglicht zum einen eine Anpassung des Verstellvorgangs einer Fensterscheibe an komplexe Türstrukturen sowie zum anderen insbesondere das definierte Anfahren einer karosserieseitigen Dichtung im Fall rahmenloser Fahrzeugtüren.

Bei einer in üblicher Weise durch Verfahren des Mitnehmers 3 anzuhebenden bzw. abzusenkenden Fensterscheibe, um hiermit eine Fensteröffnung zu verschließen bzw. freizugeben, bildet die vertikale Fahrzeugachse z die sogenannte Hauptverstellrichtung, also die Hauptkomponente der Verstellbewegung des Mitnehmers 3 und damit auch der hieran befestigten Fensterscheibe. Diese wird jedoch überlagert durch Bewegungskomponenten sowohl entlang der Fahrzeuglängsachse x als auch entlang der horizontalen Fahrzeugquerachse y, um die vorstehend beschriebenen komplexeren Bewegungen des Mitnehmers 3 bei einer Verstellung der Fensterscheibe zu ermöglichen.

Die Führungsbahnen 21, 22, 13 sind dabei im Ausführungsbeispiel der Figuren 1A bis 4B als Führungsprofile ausgebildet, die jeweils einen von der Trägerbaugruppe 1, 2 (im Wesentlichen senkrecht) abstehenden Führungsschenkel umfassen, welcher durch seinen Verlauf entlang der Trägerbaugruppe 1, 2 eine jeweilige Führungsbahn 21, 22, 13 definiert.

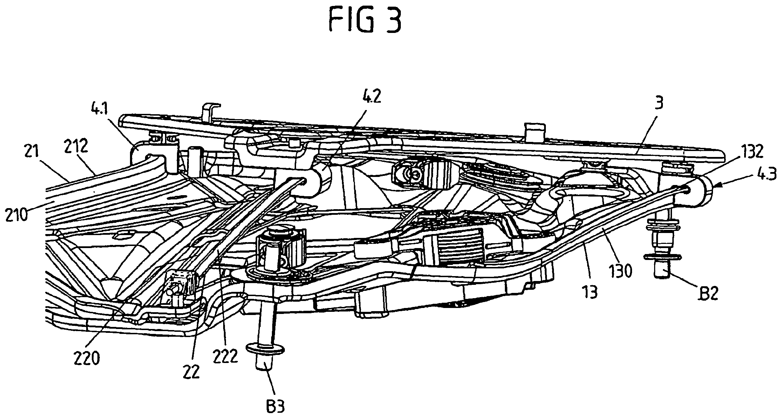

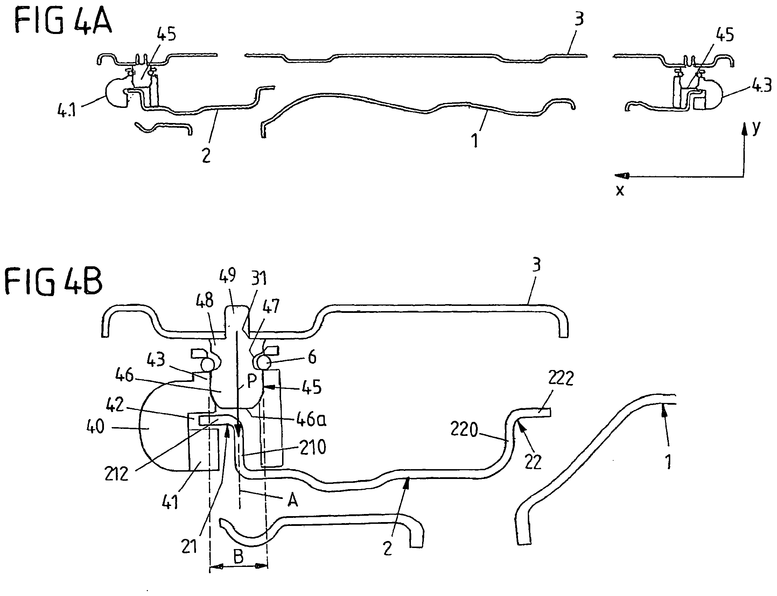

Die Gleiter 4.1, 4.2, 4.3 umgreifen dabei den längserstreckten Führungsschenkel der jeweiligen Führungsbahn 21, 22, 13. Genauer erkennbar ist dies insbesondere anhand der Figuren 3, 4A und 4B, wonach die Führungsbahn 21, 22, 13 jeweils einen von der Trägerbaugruppe 1, 2 abstehenden, abgewinkelten Führungsschenkel 210, 220, 130 umfassen, dessen jeweiliger abgewinkelter Endabschnitt 212, 222, 132 vom jeweiligen Gleiter 4.1, 4.2, 4.3 umgriffen wird, wozu jeder der Gleiter 4.1, 4.2, 4.3 einen Grundkörper 40 mit einem Umgriffsbereich 41 aufweist, welcher eine Ausnehmung zur Aufnahme des abgewinkelten Endabschnittes 212, 222, 132 des jeweiligen Führungsschenkels definiert. Bei bestimmungsgemäßer Anordnung des jeweiligen Gleiters 4.1, 4.2, 4.3 auf der zugeordneten Führungsbahn bzw. deren Führungsprofil greift der abgewinkelte Endabschnitt 212, 222, 132 des jeweiligen Führungsschenkels 210, 220, 130 in die schlitzförmige Aufnahme 42 des jeweiligen Gleiters 4.1, 4.2, 4.3 ein und wird dabei von dessen Umgriffsbereich 41 untergriffen. Die Umgriffsbereiche 41 sind hier an jedem der Gleiter 4.1, 4.2, 4.3 identisch ausgebildet.

Im Ergebnis ist der jeweilige Gleiter 4.1, 4.2, 4.3 auf dem Führungsprofil bzw. genauer dem Führungsschenkel der jeweiligen Führungsbahn 21, 22, 13 längsverschieblich gelagert, wobei ein formschlüssiger Eingriff zwischen dem jeweiligen Gleiter und dem zugehörigen Führungsprofil besteht. Die konkrete Realisierung des Formschlusses kann dabei selbstverständlich von dem vorstehend beispielhaft beschriebenen Zusammenwirken des Umgriffsbereichs 42 eines jeweiligen Gleiters mit dem abgewinkelten Endabschnitt 212, 222, 132 des zugehörigen Führungsprofils abweichen.

Um den Mitnehmer 3 entlang der Führungsbahn 21, 22, 13 zu verfahren, insbesondere anzuheben oder abzusenken, ist an der Trägerbaugruppe 1, 2, vorliegend konkret am Modulträger 1, ein Verstellantrieb 5 vorgesehen. Dieser umfasst im Ausführungsbeispiel einen Antriebsmotor 50, eine zugehörige Steuereinheit 51, z. B. in Form eines Elektronikmoduls, sowie ein dem Antriebsmotor 50 nachgeordnetes Verstellgetriebe 52. Das Verstellgetriebe dient zur Umsetzung eines vom Antriebsmotor 50 erzeugten Antriebsmomentes in eine Verstellbewegung, um den Mitnehmer 3 entlang der Führungsbahnen 21, 22, 13 verfahren zu können. Im Ausführungsbeispiel ist das Verstellgetriebe 52 als sogenanntes Seiltrommelgetriebe ausgebildet. D. h., das Verstellgetriebe 52 weist ausgangsseitig eine Seiltrommel auf, die mittels des Antriebsmotors 50 angetrieben wird (so dass sie sich um eine Achse dreht) und die von einem flexiblen Zugmittel Z umschlungen ist, welches wiederum mit dem Mitnehmer 3 verbunden ist.

Um das von dem Verstellantrieb 5 abgehende flexible Zugmittel Z so zu führen, dass es sich in üblicher Weise mit einem (vorliegend nicht dargestellten) Verstellabschnitt entlang der Verstellrichtung des Mitnehmers 3 erstreckt, sind an der Trägerbaugruppe 1, 2, konkret am Modulträger 1, Umlenkelemente 55, 56 vorgesehen.

Im Betrieb des Antriebsmotors 50 wird die ausgangsseitige Seiltrommel des Verstellgetriebes 52 - je nach Aktivierungsrichtung des Motors - entlang der einen oder anderen Richtung gedreht, wobei sich der Verstellabschnitt des die Seiltrommel umschlingenden flexiblen Zugmittels Z im Wesentlichen entlang der vertikalen Fahrzeugachse z nach oben oder nach unten bewegt und hierbei den am Verstellabschnitt des flexiblen Zugmittels angebundenen Mitnehmer 3 mitnimmt, so dass eine am Mitnehmer 3 festgelegte Fensterscheibe angehoben oder abgesenkt wird.

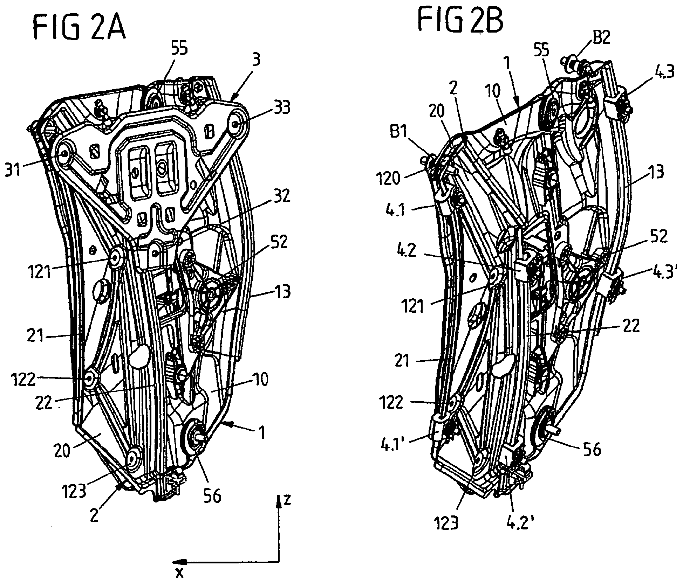

In Figur 2B sind dabei die Gleiter 4.1, 4.2 und 4.3, über die der Mitnehmer 3 mit den Führungsbahnen 21, 22, 13 in Eingriff steht, jeweils in einer oberen Verstellposition - entlang der jeweiligen Führungsbahn betrachtet - und zusätzlich in einer unteren Verstellposition dargestellt, dort mit den Bezugszeichen 4.1', 4.2' und 4.3' versehen.

Die Befestigung der vorbeschriebenen Trägerbaugruppe 1, 2 an einer Fahrzeugtür erfolgt über Befestigungsmittel B1, B2, B3, die in den Figuren 1A bis 3 angedeutet sind. Hierfür können die aus dem Stand der Technik bekannten Befestigungsmethoden zur Anwendung kommen, wobei an zumindest einer Befestigungsstelle (B2) eine einstellbare Befestigung an der Fahrzeugtür bzw. Türkarosserie vorgesehen sein kann, etwa um Toleranzen auszugleichen.

Gemäß einer Modulbauweise kann die Trägerbaugruppe 1, 2 zunächst mit den vorstehend beschriebenen Elementen eines Fensterhebers bestückt sein, bevor sie bestimmungsgemäß in eine Kraftfahrzeugtür eingebaut und dort befestigt wird.

Aufgrund der Führung des Mitnehmers 3 (hier in Form einer Hebeschiene) an beispielhaft insgesamt drei voneinander beabstandeten Führungsbahnen 21, 22, 13, wobei eine Beabstandung insbesondere quer zur Hauptverstellrichtung z des Mitnehmers 3 vorgesehen ist, liegt hier eine Überbestimmung des Systems vor. D. h., schon minimale Toleranzen könnten zu einem Verklemmen des Mitnehmers 3 bzw. genauer der zugeordneten Gleiter 4.1, 4.2, 4.3 in den Führungsbahnen 21, 22, 13 bzw. den zugehörigen Führungsprofilen führen.

Um Verspannungen bzw. sogar ein Verklemmen des Systems als Folge einer Überbestimmung zu vermeiden, steht der jeweilige Gleiter 4.1, 4.2, 4.3, der zur Führung des Mitnehmers 3 in den Führungsbahnen 21, 22, 13 dient, gelenkig mit dem Mitnehmer 3 in Eingriff. Im Ausführungsbeispiel der Figuren 1A bis 4B ist zur Lagerung des jeweiligen Gleiters 4.1, 4.2, 4.3, von denen in Figur 4B beispielhaft einer dargestellt ist, eine Kugelkopf-Lagerung vorgesehen. Hierdurch können die Umgriffsbereiche 41 der Gleiter 4.1, 4.2, 4.3 frei von Mitteln zum Toleranzausgleich bleiben.

Konkret ist im Ausführungsbeispiel der jeweilige Gleiter über ein Lagerelement 45 mit dem Mitnehmer 3 verbunden, das zur Bildung eines Gelenkes einen Lagerkopf 46, z. B. in Form eines Kugelkopfes, aufweist, der in einem zugeordneten Lagerbereich 43 gelagert ist. Der Lagerbereich kann dabei wahlweise dem Mitnehmer 3 oder dem jeweiligen Gleiter 4.1, 4.2, 4.3 zugeordnet sein bzw. hieran angeordnet sein. Gemäß der in den Figuren gezeigten Variante ist der zur Aufnahme des Lagerkopfes 46 vorgesehene Lagerbereich 43 jeweils am Gleiter 4.1, 4.2 bzw. 4.3 ausgebildet.

Der Lagerbereich 43 ist dabei so ausgeführt, dass der Lagerkopf 46 hierin in allen Raumrichtungen verschwenkt werden kann, um so entlang beliebiger Richtungen Toleranzen ausgleichen und hierdurch Verspannungen vermeiden zu können. Der Lagerkopf 46 ist vorliegend nur abschnittsweise kugelartig ausgebildet und weist beispielsweise eine abgeplattete Deckfläche 46a auf. Mit einem weiteren, im Ausführungsbeispiel zapfenartigen, Lagerabschnitt 49 ist das Lagerelement 45 am Mitnehmer 3 gelagert, genauer in einer (kreisförmigen) Öffnung 31 des Mitnehmers 3.

Die Lagerung ist dabei vorteilhaft derart, dass eine Drehbewegung des Lagerelementes 45 in dem zugeordneten Lagerbereich 43 um bis zu 5°, insbesondere bis zu 7,5° oder 10°, entlang jeder Raumrichtung möglich ist.

Darüber hinaus ist dem Lagerelement 45 ein Sicherungselement 6 (hier ein Sicherungsbügel) zugeordnet, dass im Ausführungsbeispiel der Figuren 4a und 4b beispielhaft an einer Verjüngung bzw. Aussparung 47 des Lagerelementes 45 angreift, die sich hier beispielhaft zwischen dem Lagerkopf 46 und einem Bund 48 des Lagerelementes 45 befindet. Genaueres hierzu lässt sich den Figuren 5A bis 5D entnehmen. Danach ist das Sicherungselement im Wesentlichen U-förmig ausgestaltet mit einer Basis 60 und zwei hiervon abstehenden Schenkeln 61, 62, vgl. Fig. 5B, die jeweils formschlüssig (an einander gegenüberliegenden Seiten) in die (umlaufende) Aussparung 47 des Lagerelementes 45 eingreifen, wenn das Sicherungselement 6 bestimmungsgemäß in den Lagerbereich 43 des entsprechenden Gleiters eingesetzt ist.

Gemäß Fig. 5A wird das Lagerelement 45 zunächst mit seinem Lagerkopf 46 (in Form eines Kugelkopfes mit abgeplatteter Deckfläche 46a) in den Lagerbereich 43 des zugehörigen Gleiters eingesetzt, so dass der Lagerkopf 46 in einer durch den Lagerbereich 43 definierten Aufnahme 43a aufnommen ist, wie in Fig. 5A dargestellt.

Anschließend wird gemäß den Figuren 5C und 5D das in Fig. 5B gezeigte U-förmige Sicherungselement 6 (mit seinen beiden Schenkeln 61, 62) derart in die Aufnahme 43A des Lagerbereiches 43 eingeführt, dass die beiden Schenkel 41, 42 des Sicherungselementes formschlüssig in die umlaufende Aussparung 47 des Lagerelementes 45 eingreifen und hierdurch das Lagerelement 45 in dem Lagerbereich 43 (verliersicher) halten. Das Sicherungselement 6 bzw. beide Schenkel 61, 62 sind dabei durch Führungsabschnitte 431, 432 in Form von Führungsöffnungen des Lagerbereiches 43 geführt und hierdurch auch am Lagerbereich 43 aufgenommen.

Durch den formschlüssigen Eingriff des Sicherungselementes 6 in das Lagerelement 45, speziell indem die Schenkel 61, 62 des Sicherungselementes 6 in die Aussparung 47 des Lagerelementes 45 eingreifen, wird das Lagerelement 45 selbst unter Einwirkung großer Kräfte sicher in dem Lagerbereich 43 gehalten. Zur Entnahme des Lagerelementes 45 aus dem Lagerbereich 43 ist es erforderlich, das Sicherungselement 6 aus der in den Figuren 5C und 5D gezeigten Sicherungsposition herauszubewegen, in der es das Lagerelement 45 innerhalb des Lagerbereiches 43 hält.

Wie in Fig. 5B gestrichelt angedeutet, können die Schenkel 61, 62 des Sicherungselementes 6 an ihren freien Enden leicht nach außen gebogen sein, um ein Einführen des Sicherungselementes zu erleichtern. Alternativ und/oder ergänzend kann hierfür an den Schenkeln 61, 62 beispielsweise auch eine Einführphase oder eine sonstige Schrägfläche bzw. Abrundung ausgebildet sein.

Anhand der Figuren 3, 4A und 4B wird weiter deutlich, dass das Lagerelement 45, über welches der jeweilige Gleiter 4.1, 4.2, 4.3 mit dem Mitnehmer 3 verbunden ist, oberhalb des Führungsschenkels 210, 220, 130 der jeweiligen Führungsbahn 21, 22, 13 angeordnet ist. Mit anderen Worten ausgedrückt, schneidet eine senkrechte Projektion P des Führungselementes 45 auf die Trägerbaugruppe 1, 2, also eine senkrecht zur Haupterstreckungsebene der Trägerbaugruppe 1, 2 gerichtete Projektion P, den Führungsschenkel 210, 220, 130 des jeweiligen Führungsprofiles. Letzteres ist gleichbedeutend damit, dass eine Achse A, entlang der der jeweilige Führungsschenkel 210, 220, 130 von der Trägerbaugruppe 1, 2 ausgeht und die im Führungsschenkel selbst verläuft, innerhalb eines Bereiches B liegt, der - in einem Querschnitt entlang der xy-Ebene, wie in Figur 4A und 4B dargestellt - durch zwei Linien begrenzt wird, welche in jener Querschnittsebene (xy-Ebene) wiederum den Lagerkörper 46 seitlich begrenzen. Die xy-Ebene ist dabei diejenige Ebene, die sich senkrecht zur vertikalen Fahrzeugachse z erstreckt.

Dadurch, dass das Lagerelement 45, welches den Mitnehmer 3 mit dem jeweiligen Gleiter 4.1, 4.2, 4.3 verbindet, oberhalb des Führungsschenkels 210, 220, 130 des jeweils zugehörigen Führungsprofils (Führungsbahnen 21, 22, 13) angeordnet ist, wirken am Mitnehmer 3 auftretende Kräfte, welche über das jeweilige Lagerelement 45 und den jeweiligen Gleiter 4.1, 4.2, 4.3 auf das zugehörige Führungsprofil übertragen werden, unmittelbar an dessen jeweiligem Führungsschenkel 210, 220, 130, ohne dass substantielle Hebelkräfte erzeugt würden (welche insbesondere dann aufträten, wenn das jeweilige Lagerelement 45 entlang der x-Achse von dem zugehörigen Führungsschenkel 210, 220, 130 beabstandet wäre). Hierdurch sollen Kippmomente beim Zusammenwirken des Mitnehmers 3 mit den Führungsbahnen 21, 22, 13 reduziert werden.

Insbesondere kann mit der beschriebenen Anordnung der Achse A des jeweiligen Führungsschenkels innerhalb des durch den Lagerkopf 46 definierten Bereiches B der seitliche Hebelarm beim kraftmäßigen Zusammenwirken des Mitnehmers 3 mit dem jeweiligen Führungsprofil den Halbmesser (0.5*B) des Lagerkopfes 46 nicht überschreiten.

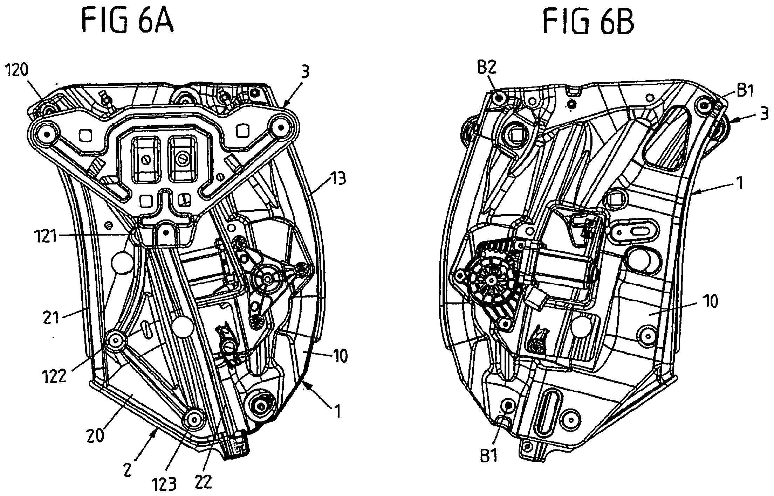

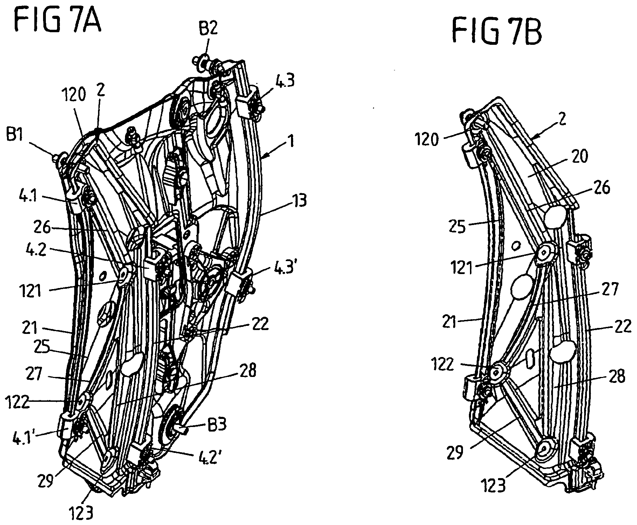

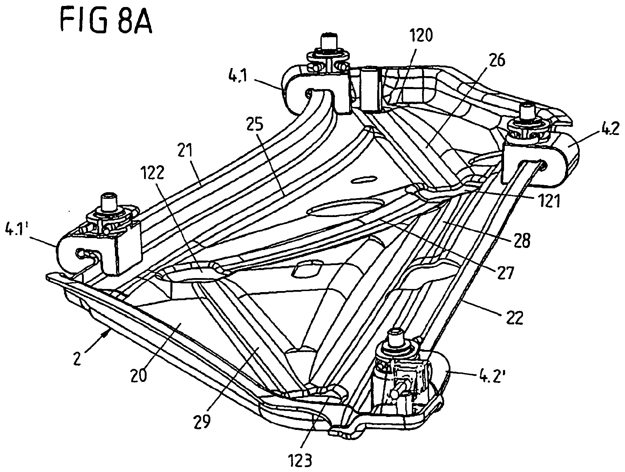

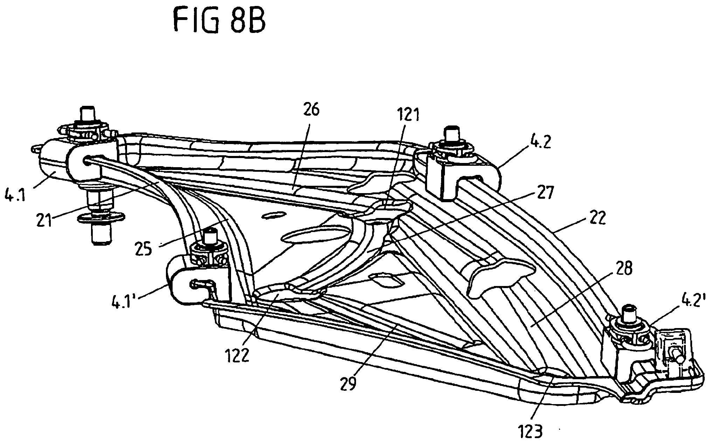

Wie anhand der Figuren 6A bis 8B deutlich wird, die weitere Darstellungen des Ausführungsbeispieles der Figuren 1A bis 4B zeigen, sind zur Bildung einer Trägerbaugruppe 1, 2, wie in den Figuren 6A bis 7A dargestellt, der Modulträger 1 und die Führungsplatte 2, wie in den Figuren 7B, 8A und 8B jeweils einzeln dargestellt, an mehreren Befestigungsstellen 120, 121, 122, 123 miteinander verbunden. An der Führungsplatte 2 werden die Befestigungsstellen 120, 121, 122, 123 dabei jeweils durch Befestigungsöffnungen gebildet, welche vorliegend gemäß Ausführungsbeispiel in (topfartigen) Materialeinziehungen vorgesehen sind. Diesen Befestigungsstellen können dann übliche Befestigungsmittel, z. B. in Form von Schrauben oder Nieten, zugeordnet sein.

In den Figuren ist unter anderem jeweils beispielhaft ein Befestigungselement B1 angedeutet, das eine entlang der y-Achse, also senkrecht zu der durch die Trägerbaugruppe 1, 2 aufgespannten (xz-)Ebene, einstellbare Verbindung des Modulträgers 1 und der Führungsplatte 2 ermöglicht.

Die Befestigungsstellen 120, 121, 122, 123 sind an der Führungsplatte 2 über Verbindungs- und Versteifungsbereiche 25, 26, 27, 28, 29 miteinander verbunden, die jeweils als Verbindungs- bzw. Versteifungsprofile aus der Führungsplatte 2 bzw. deren Grundkörper 20 herausgeformt sind und Versteifungspfade in Form längserstreckter Profilierungen bilden. Die Versteifungspfade 25 bis 29 können beispielsweise durch Sicken, Rippe, Materialausstellungen, Materialdopplungen und dergleichen gebildet werden.

Von Bedeutung ist, dass es sich bei den Versteifungspfaden jeweils um entlang der Führungsplatte 2 bzw. deren Grundkörper 20 erstreckte Verbindungs- bzw. Versteifungsbereiche handelt, die lokal jeweils durch Ausformungen an der Führungsplatte 2 bzw. deren Grundkörper 20 gebildet sind.

Dass die Versteifungspfade 25 bis 29 die Befestigungsstellen 120 bis 123 miteinander verbinden, bedeutet dabei, dass in die Befestigungsstellen 120 bis 123 bzw. deren Materialeinziehung jeweils einer der Versteifungspfade 25 bis 29 übergeht oder hieran angrenzt. Angrenzen soll dabei insbesondere bedeuten, dass der jeweilige Versteifungspfad die Materialeinziehung der zugehörigen Befestigungsstelle berührt.

Insbesondere anhand der Figuren 6A, 7A und 8A ist erkennbar, dass mehrere Versteifungspfade 26, 27, 28, 29 jeweils in die Materialeinziehungen von Befestigungsstellen 120, 121, 122, 123 übergehen, während ein weiterer Versteifungspfad 25 unmittelbar an die Materialeinziehungen zweier Befestigungsstellen 120, 122 angrenzt, so dass er diese berührt.
Die Befestigungsstellen 120 bis 123 bzw. deren Materialeinziehungen bilden dabei Knotenpunkte in einem Netz aus Versteifungspfaden 25 bis 29. Mit anderen Worten ausgedrückt, verbinden die Verstärkungspfade 25 bis 29 die Befestigungsstellen 120 bis 123 unter Bildung einer netzartigen Struktur (Versteifungsnetz). Die Befestigungsstellen 120 bis 123, über die die Führungsplatte 2 und der Modulträger 1 miteinander verbunden sind, sind dabei vorteilhaft so angeordnet, dass sie eine optimale Kraftübertragung in allen Positionen des Mitnehmers 3 entlang der zugehörigen Führungsbahnen 21, 22, 13 gewährleisten.
Die Befestigungsstellen 120 bis 123 sind hierzu entlang der Hauptverstellrichtung z des Mitnehmers 3 hintereinander angeordnet und gleichzeitig entlang der Richtung x quer zur Hauptverstellrichtung z voneinander beabstandet angeordnet, und zwar im Ausführungsbeispiel derart, dass die Befestigungsstellen 120 bis 123 abwechselnd nahe bei der ersten Führungsbahn 21 und nahe bei der zweiten Führungsbahn 22 der Führungsplatte 2 liegen.
Vorteilhaft sind dabei sämtliche Befestigungsstellen 120 bis 123 mit mindestens je einem der Versteifungspfade 25 bis 29 verbunden, wobei im Ausführungsbeispiel sogar in jede Befestigungsstelle 120 bis 123 mindestens zwei Verstärkungspfade 25 bis 29 übergehen bzw. diese berühren. Konkret sind es bei den beiden randseitigen Befestigungsstellen 120 und 123, die, entlang der Hauptverstellrichtung z betrachtet, das obere und untere Ende des Versteifungsnetzes bilden, jeweils zwei Versteifungspfade und bei den entlang der z-Richtung dazwischen angeordneten Befestigungsstellen 121, 122 jeweils drei Versteifungspfade.
Durch eine solche Struktur kann bei minimalem Gewicht eine maximale Steifigkeit sowohl der Führungsplatte 2 selbst als auch der Trägerbaugruppe aus Modulträger 1 und der Führungsplatte 2 erreicht werden.

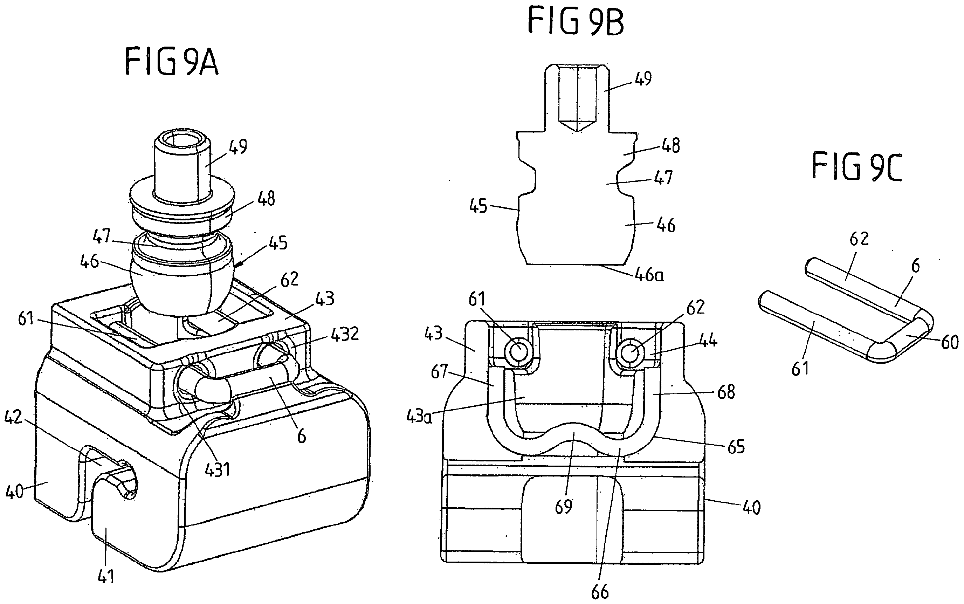

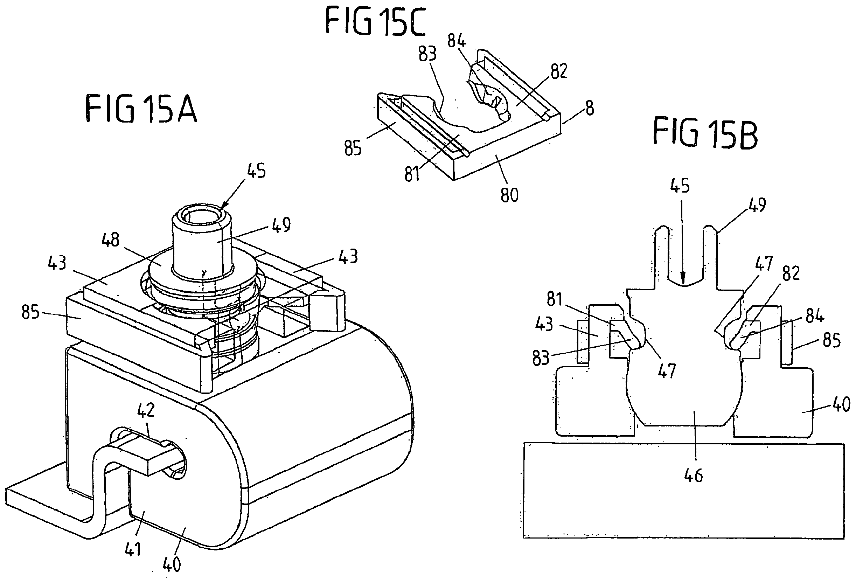

Nachfolgend werden anhand der Figuren 9A 10A bis 14B unterschiedliche erfindungsgemäße Ausführungsbeispiele und anhand der Figuren 15A bis 21B weitere Beispiele erläutert werden, wie das Lagerelement 45 innerhalb des Lagerbereiches 43 zuverlässig sicherbar ist, wobei gleichzeitig eine möglichst einfach Montage der hierfür erforderlichen Sicherungsmittel möglich sein soll.

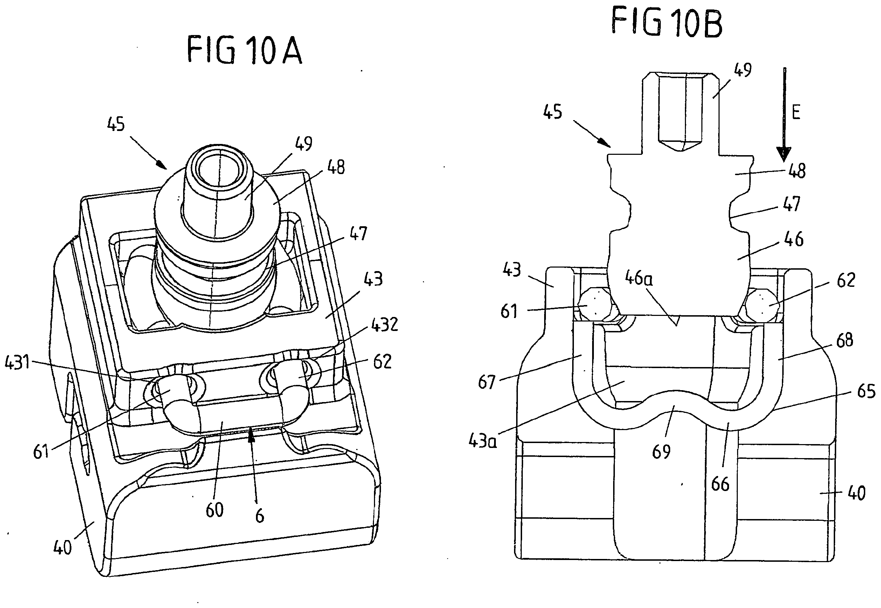

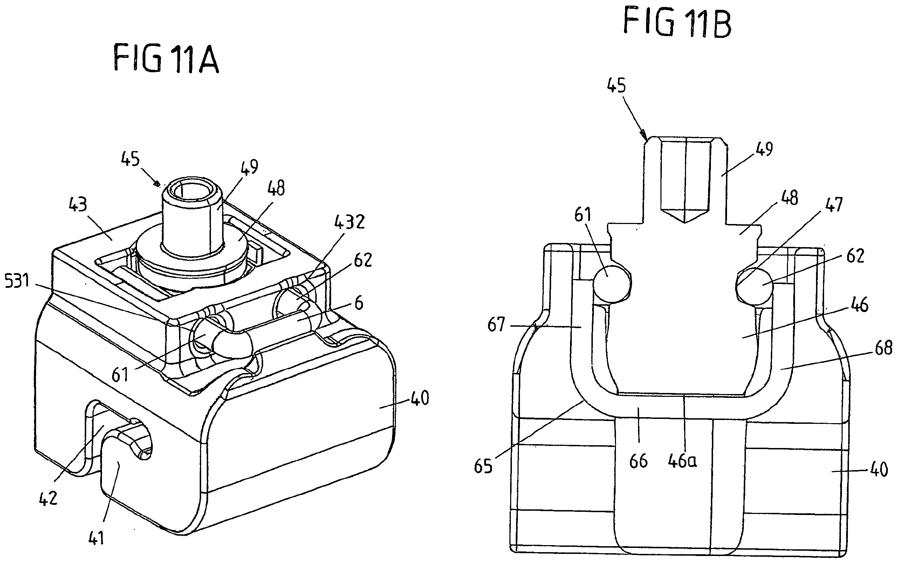

Die Anordnung der Figuren 9A bis 11B zeigt eine erfindungsgemäße Weiterbildung des anhand der Figuren 5A bis 5D beschriebenen Beispieles, unter Verwendung eines von der grundsätzlichen Struktur her übereinstimmenden U-förmigen (bevorzugt aus Metall oder Kunststoff bestehenden) Sicherungselementes 6 mit einer Basis 60 und zwei hiervon abstehenden Schenkeln 61, 62, wobei jedoch vorliegend das Sicherungselement 6 derart am Lagerbereich 43 angeordnet ist, dass es während des Einbringens des Lagerelementes 45 in den Lagerbereich 43 aufgespreizt wird.
Hierzu ist das Sicherungselement 6, vgl. Fig. 9C, in den Lagerbereich 43 eingesetzt, bevor gemäß der Figuren 9A und 9B das Lagerelement 45 dort eingebracht wird. Dabei ist das Sicherungselement 6 wiederum mittels Führungen 431, 432 am Lagerbereich definiert gehalten.
Das Material des Sicherungselementes 6 und/oder dessen Querschnitt sind dabei vorliegend so gewählt, dass das bereits bestimmungsgemäß am Lagerbereich 43 positionierte Sicherungselement 6 durch den Lagerkopf 46 des Lagerelementes 45 aufspreizbar ist, wenn letzteres in das Innere 43a des Lagerbereiches 43 eingeführt wird, wie in den Figuren 10A und 10B dargestellt.
Nach dem vollständigen Einführen des Lagerelementes 45 in das Innere 43a des Lagerbereiches 43 schnappt das Sicherungselement 6 mit seinen Schenkeln 61, 62 in die (umlaufende) Aussparung 47 des Lagerelementes 45 ein, um dieses innerhalb des Lagerbereiches 43 zu halten.
In diesem Zustand wird ein Aufspreizen des Sicherungselementes 6 nach außen durch ein zusätzliches, sekundäres Sicherungselement (Verriegelungselement) 65 verhindert, das hier beispielhaft als Verriegelungsfeder ausgeführt ist. Weiter ist es gemäß den Figuren 11A und 11B im Ausführungsbeispiel U-förmig ausgestaltet, mit einer Basis 66 und zwei hiervon abstehenden Schenkeln 67, 68, welche außen an den Schenkeln 61, 62 des Sicherungselementes 6 anliegen und dadurch deren Aufspreizen verhindern. Dabei sind die Schenkel 67, 68 des sekundären Sicherungselementes bzw. Verriegelungselementes 65 an Wandabschnitten des Lagerbereiches 43 abgestützt.

Wie anhand der Figuren 9A und 9B deutlich wird, ist das sekundäre Sicherungselement/Verriegelungselement 65 bereits im Inneren 43a des Lagerbereiches 43 angeordnet, bevor das Lagerelement 45 dort eingeführt wird. Allerdings befinden sich in diesem Zustand die Verriegelungsschenkel 67, 68 des Verriegelungselementes 65 noch unterhalb der Schenkel 61, 62 des Sicherungselementes 6, so dass deren Aufspreizen nicht blockiert wird, wenn das Lagerelement 45 gemäß den Figuren 10A und 10B eingeführt wird. Die Verriegelungsschenkel 67, 68 des Verriegelungselementes 65 sind dabei senkrecht zu den Schenkeln 61, 62 des Sicherungselementes 6 orientiert, welch letztere in dem in den Figuren 10A und 10B gezeigten Einführweg des Lagerelementes 45 in den Lagerbereich 45 liegen.

An seiner als Boden dienenden Basis 66 weist das Verriegelungselement in Form einer Verriegelungsfeder einen Betätigungsabschnitt 69 in Form einer Ausformung auf, welche in den Innenraum 43a des Lagerbereiches 43 weist und dabei konkret in Richtung des Einführweges des Lagerelementes 45 in jenen Lagerbereich 43 hinein. Beim Einführen des Lagerelementes 45 in den Lagerbereich 43 unter Aufspreizen des Sicherungselementes 6, wie in den Figuren 10A und 10B dargestellt, gelangt das Lagerelement 45 schließlich über seinen Lagerkopf 46 bzw. dessen abgeplattete Deckfläche 46a in Kontakt mit dem Betätigungsabschnitt 69 des Verriegelungselementes bzw. sekundären Sicherungselementes 65 und drückt derart auf den Betätigungsabschnitt 69, dass die Ausformung beseitigt und die Basis 66 des Verriegelungselementes 65 eine im Wesentlichen gradlinige Gestalt annimmt, wie in Fig. 11B erkennbar. Hierdurch werden die Verriegelungsschenkel 67, 68 innerhalb des Lagerbereiches 43 etwas nach oben verschoben, so dass sich die Verriegelungsschenkel 67, 68 neben die Schenkel 61, 62 des Sicherungselementes 6 legen und dieses innerhalb des Lagerbereiches 43 fixieren, insbesondere deren Eingriff in die Aussparung 47 des Lagerelementes 4 sichern.

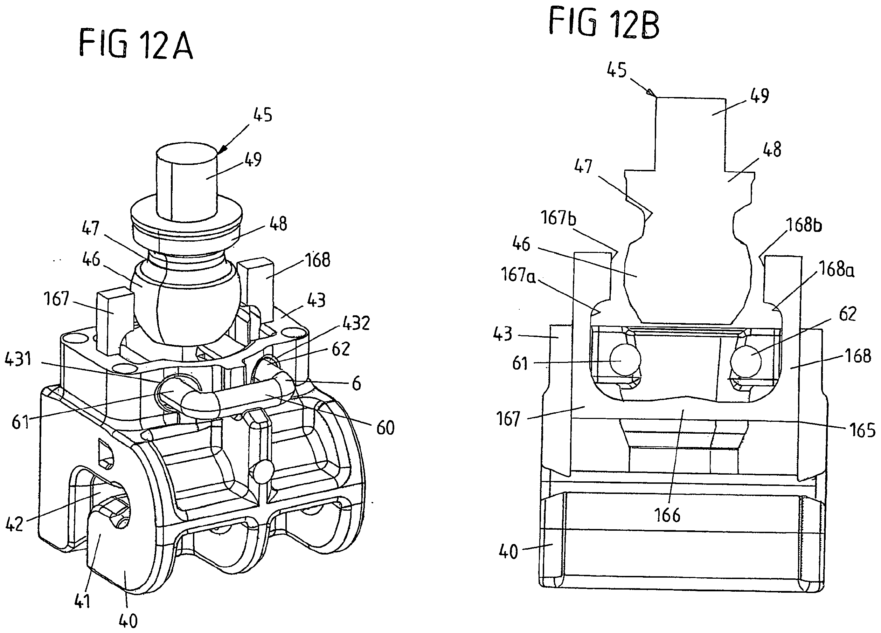

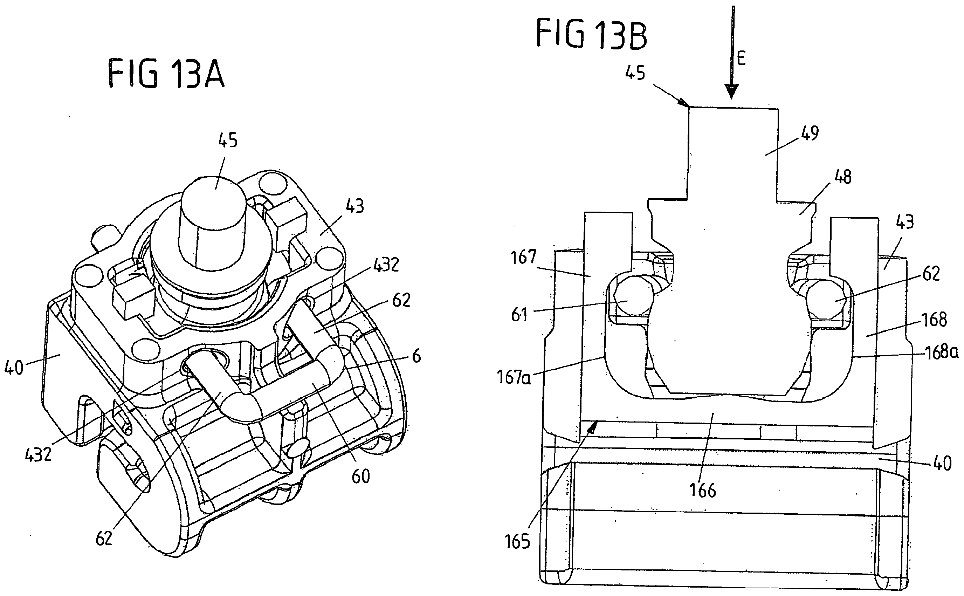

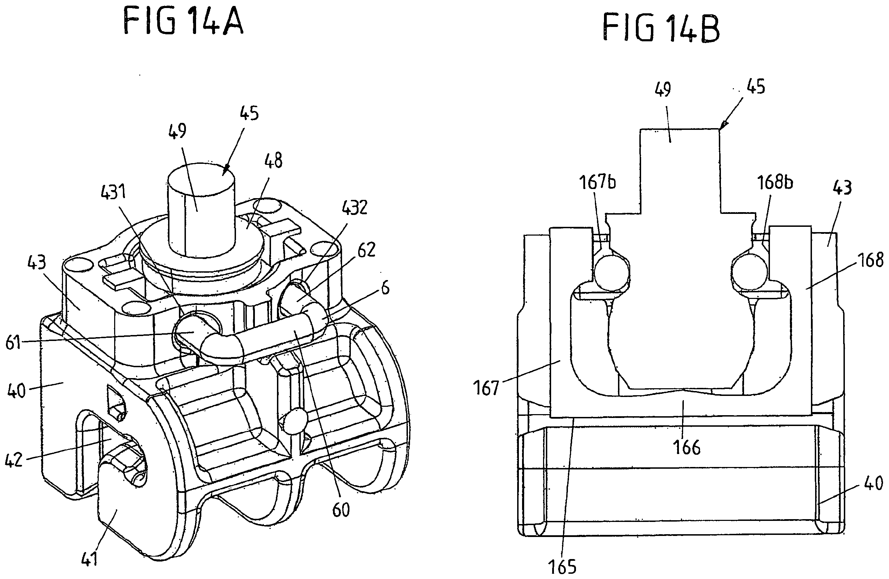

In den Figuren 12A bis 14B ist eine Abwandlung des Ausführungsbeispieles aus den Figuren 9A bis 11B dargestellt, wobei der wesentliche Unterschied in der Ausgestaltung des sekundären Sicherungselementes/Verriegelungselementes 165 besteht, welches im Ausführungsbeispiel der Figuren 12A bis 14B wiederum eine Basis 166 und hiervon abstehende Schenkel 167, 168 aufweist. Dabei weisen jedoch die Schenkel 167, 168 des Verriegelungselementes 165 in ihrem an die Basis 166 angrenzenden Bereich jeweils eine nach innen gerichtete Ausnehmung 167a, 168a auf, in der das Sicherungselement 6 aufgenommen ist, wenn dieses zusammen mit dem Verriegelungselement 165 bereits in dem Lagerbereich 43 angeordnet ist, bevor das Lagerelement 45 eingeführt wird, vgl. Figuren 12A und 12B.
Beim anschließenden Einführen des Lagerelementes 45 in den Lagerbereich 43, wie in den Figuren 13A und 13B dargestellt, lassen die Ausnehmungen 167a, 168a ein Aufspreizen des Sicherungselementes 6 bzw. von dessen Schenkeln 61, 62 zu und wirken dabei gleichzeitig als Kulissenführung für jene Schenkel 61, 62, wie anhand der in den Figuren 13A und 13B dargestellten Einführbewegung E des Lagerelementes 45 in den Lagerbereich 43 erkennbar.
Trifft das Lagerelement 45 beim Einführen in den Lagerbereich 43 mit seinem Lagerkopf 46 bzw. dessen abgeplatteter Deckfläche 46a schließlich auf die Basis 166 des Verriegelungselementes 165 auf, so wird dieses zunächst ein Stück weit bei der weiteren Einführbewegung E mitgenommen, bis es schließlich, wie in Fig. 13B dargestellt, seine bestimmungsgemäße Position im Lagerbereich 43 eingenommen hat, die in den Figuren 14A und 14B gezeigt ist. Hierbei schnappen wiederum die Schenkel 61, 62 des Sicherungselementes 6 in die Aussparung 47 des Lagerelementes 45 ein und geraten dabei neben die nicht mit einer Ausnehmung versehenen Bereiche der Verriegelungsschenkel 167, 168 des Verriegelungselementes 165, wodurch das Sicherungselement 6 bzw. dessen Schenkel 61, 62 in der betreffenden Aussparung 47 formschlüssig gehalten werden, so dass das Lagerelement 45 auch beim Wirken starker Abzugskräfte nicht aus dem Lagerbereich 43 herausgelangt, solange es durch die Anlageflächen 167b, 168b der Verriegelungsschenkel 167, 168 blockiert ist.

In den Figuren 15A bis 15C ist eine Abwandlung des Beispieles aus den Figuren 5A bis 5C dargestellt, welches auf der Verwendung eines Sicherungselementes 8 ohne zusätzliches Verriegelungselement beruht, wobei jedoch das Sicherungselement 8, welches mit einer Basis 80 und zwei hiervon abstehenden Schenkeln 81, 82 eine schubladenförmige Struktur aufweist, bereits schubladenartig in den Lagerbereich 43 eingesetzt werden kann, bevor das Lagerelement 45 eingeführt wird. Dort wird es von einem Halter 85, z. B. in Form eines Schnapphakens, gehalten.
Das Sicherungselement 8 weist im Bereich seiner Schenkel 81, 82 und gegebenenfalls auch im Bereich seiner Basis 80 schräg nach innen vorstehende elastische Zungen 83, 84 auf, die beim Einführen des Lagerelementes 45 in den Lagerbereich 43 durch dessen Lagerkopf 46 abgespreizt werden und anschließend in dessen Aussparung 47 einschnappen und diese hinterhaken, wobei die elastischen Zungen 83, 84 derart schräg gegen die Wand der Aussparung 47 drücken, dass deren Haltewirkung noch verstärkt wird, wenn auf das Lagerelement 45 Abzugskräfte wirken, welche die Tendenz haben, dieses aus dem Lagerbereich auszuheben.

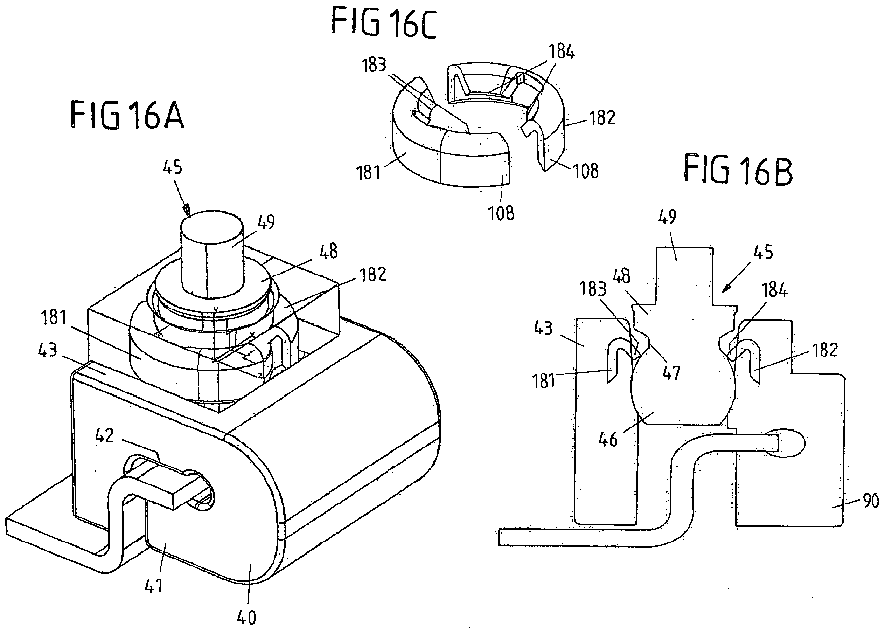

In den Figuren 16A bis 16C ist eine Anordnung gemäß den Figuren 15A bis 15B mit einem abgewandelten, zweiteiligen Sicherungselement 108 dargestellt, welches aus zwei einander gegenüberliegend angeordneten, im Wesentlichen halbkreisförmigen Sicherungsabschnitten 181, 182 besteht, die jeweils nach innen abstehende elastische Zungen 183, 184 aufweisen. Das Sicherungselement 108 ist dabei mit seinen beiden Sicherungsabschnitten 181, 182 in den Lagerbereich 43 integriert, wie in den Figuren 16A und 16B dargestellt.

Beim Einführen des Lagerelementes 45 in den Lagerbereich 43 wirkt das Sicherungselement 108 mit seinen elastischen Zungen 183, 184 in entsprechender Weise wie das Sicherungselement 8 aus den Figuren 15A, 15B mit den dortigen Zungen 83,84.

Als Material für die Sicherungselemente 8, 108 der Figuren 15A bis 15C und 16A bis 16C eignen sich beispielsweise Kunststoff und Metall, wobei für das Sicherungselement 8 der Fig. 15C insbesondere Kunststoff vorteilhaft ist und für das Sicherungselement 108 der Fig. 16C insbesondere Metall. Letzteres kann bei der Herstellung des Führungselementes/Gleiters, welcher den Lagerbereich 43 definiert, mit eingespritzt werden.

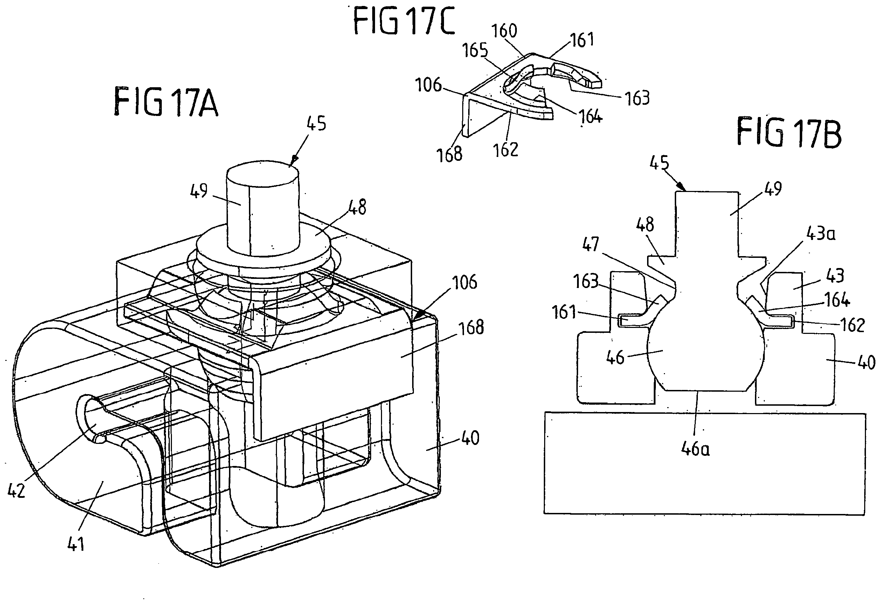

In den Figuren 17A bis 17C ist eine Abwandlung der Anordnung der Figuren 5A bis 5C dargestellt, gemäß der das Sicherungselement 106 erst in den Lagerbereich 43 eingeschoben wird, nachdem das Lagerelement 45 dort bereits eingefügt worden ist.

Das Sicherungselement 160 ist U-förmig (und dabei schubladenartig) ausgebildet und umfasst eine Basis 160 mit hiervon abstehenden Schenkeln 161, 162, wobei sowohl von der Basis 160 als auch von den Schenkeln 161, 162 Sicherungsbereiche 163, 164, 165 nach innen vorspringen, welche in die Aussparung 47 des Lagerelementes 45 eingreifen, vgl. Figuren 17A und 17B, wenn das Sicherungselement 106 nach dem Einfügen des Lagerelementes 45 in den Lagerbereich 43 eingeschoben wird. Mittels eines abgewinkelten Abschnittes 168 liegt dabei das Sicherungselement 106 an der Außenwand des Lagerbereiches 43 an, wenn es bestimmungsgemäß derart seitlich eingeschoben worden ist, dass dessen Sicherungsabschnitte 163 bis 165 in die Aussparung 47 des Lagerelementes 45 eingreifen.

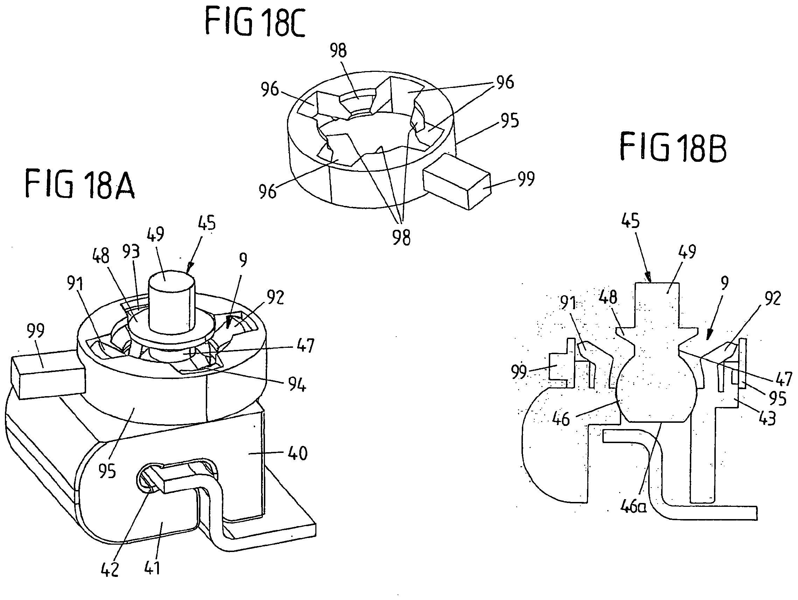

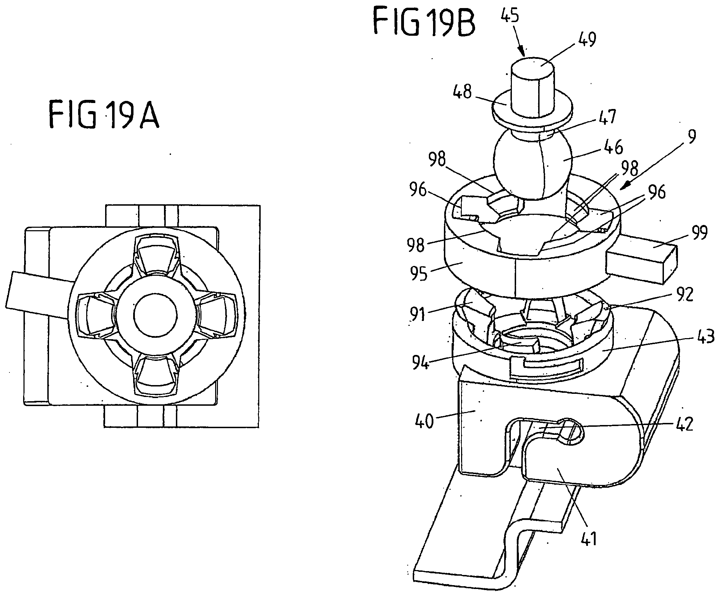

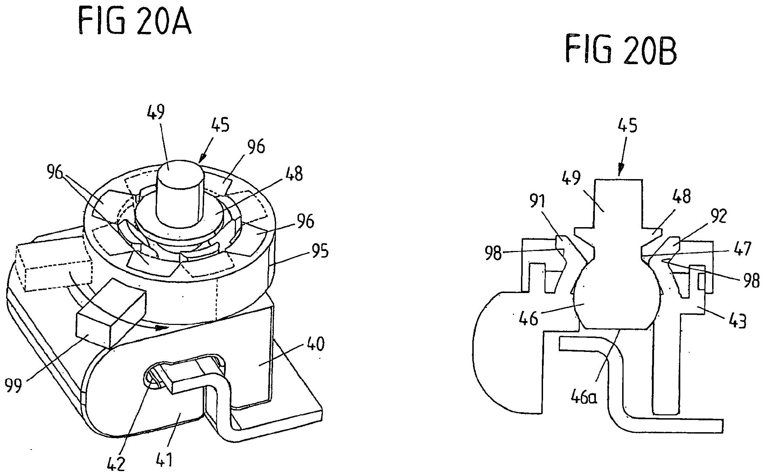

Beim Beispiel der Figuren 18A bis 21B sind als Sicherungselement 9 mehrere federnde Rasthaken bzw. Rastzungen 91 bis 94 am Lagerbereich 43 angeformt, die gemäß den Figuren 18A, 18B und 19A, 19B beim Einführen des Lagerelementes 45 in den Lagerbereich 43 durch den Lagerkopf 46 aufgespreizt werden können und die anschließend gemäß den Figuren 20A bis 21B in die Aussparung 47 des Lagerelementes 45 hineinfedern und formschlüssig in diese eingreifen.

Diesem Sicherungselement 9 mit elastischen Rasthaken bzw. Rastzungen 91 bis 94 ist als sekundäres Sicherungselement bzw. Verriegelungselement 95 eine Krone zugeordnet, welche gemäß Fig. 18C ringförmig ausgestaltet ist und welche gemäß den Figuren 18A, 18B, 19A derart am Lagerbereich 43 angeordnet wird, dass es die Rasthaken bzw. -zungen des Sicherungselementes 9 umgreift.

Das Verriegelungselement 95 weist an seiner Innenseite Aussparungen 96 auf, in die die Rasthaken bzw. -zungen 91 bis 94 ausweichen können, wenn sie beim Einführen des Lagerelementes 43 aufgespreizt werden, wie in den Figuren 18A, 18B und 19A erkennbar, wobei Fig. 19B eine zusätzliche Explosionsdarstellung zur Illustration der Einzelheiten ist.

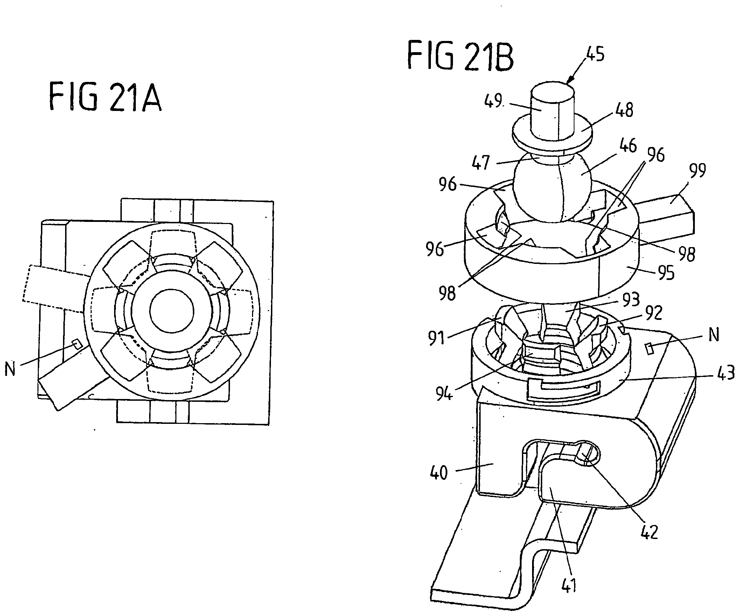

Wenn nach dem vollständigen Einführen des Lagerelementes 45 in den Lagerbereich 43 die Rasthaken bzw. -zungen des Sicherungselementes 9 in die Aussparung 47 des Lagerelementes 45 eingreifen, wird das (ringförmige) Verriegelungselement 95 (mittels eines Betätigungsabschnittes 99) gedreht, z. B. um 45°, so dass nun nicht mehr die Aussparungen 96, sondern vielmehr Blockierabschnitte 98 den Rasthaken bzw. -zungen 91 bis 94 gegenüberliegen. Hierdurch werden diese fest in der Position gehalten, in der sie in die Aussparung 47 des Lagerelementes 45 eingreifen, wie in den Figuren 20A, 20B und 21A dargestellt, unter zusätzlicher Veranschaulichung anhand der Explosionsdarstellung gemäß Fig. 21B.

In den Figuren 21A und 21B ist weiterhin schematisch eine Rastnase N angedeutet, die dazu dienen kann, das kronenförmige Verriegelungselement 95 in seiner verriegelten Stellung zu halten und die hierzu beispielsweise mit dem Betätigungselement 99 des Verriegelungselementes 95 zusammenwirken kann. Die Rastnase N kann elastisch ausgeführt sein, so dass sie unter hinreichender Krafteinwirkung überfahrbar ist, um das Verriegelungselement 99 wieder in seine entriegelte Position überführen zu können. Ferner kann die Rastnase N eine Schrägfläche z. B. in Form einer Rampe, aufweisen, um das Überfahren unter Krafteinwirkung zu erleichtern.

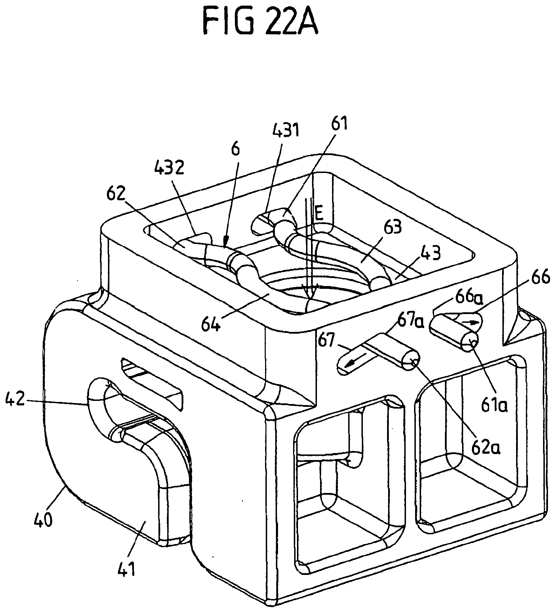

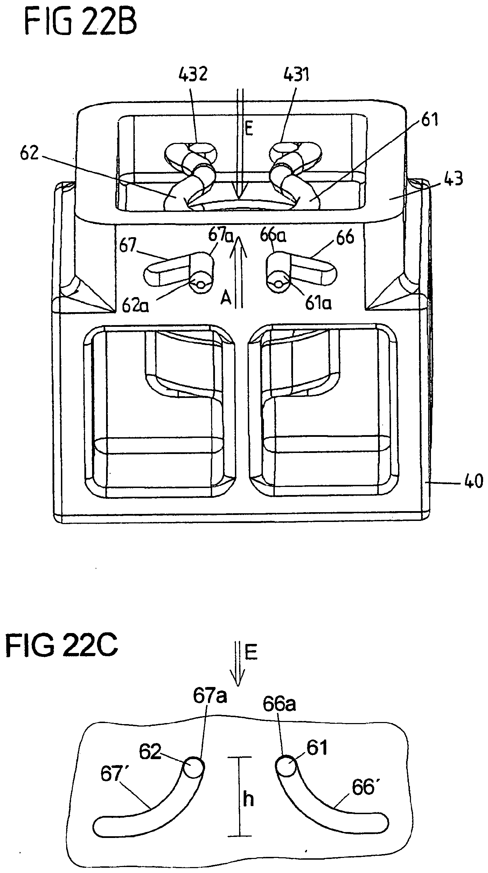

Die Figuren 22A und 22B zeigen jeweils in perspektivischer Darstellung eine weitere Abwandlung der Anordnung aus den Figuren 5A und 5B.

Danach weist zum einen das Sicherungselement 6 (in Form eines Sicherungsbügels) in seinen Schenkeln 61, 62 jeweils einen Rastbereich 63, 64 auf, hier gebildet durch eine Krümmung des jeweiligen Schenkels 61, 62 nach außen. Die Rastbereiche 63, 64 der Schenkel 61, 62 werden beim Einführen eines Lagerelementes 45 in den Lagerbereich 43 entlang eines Einführweges in Einführrichtung E, wie auch in den Figuren 5A, 5C und 5D dargestellt, nach außen (quer zur Einführrichtung E) weggedrückt, um den Einführweg für das Einbringen des Lagerelementes in den Lagerbereich 43 freizugeben. Anschließend greifen die Schenkel 61, 62 des Sicherungselementes 6 mit ihrem Rastbereich 63, 64 in das Lagerelement 45 ein, wie für ein vergleichbares Sicherungselement 6 (ohne speziell geformte Rastbereiche) in Figur 5D dargestellt, und sichern dieses innerhalb des Lagerbereiches 43.

Eine weitere Abwandlung gegenüber der Anordnung aus den Figuren 5A bis 5D besteht vorliegend darin, dass gemäß den Figuren 22A und 22B die Schenkel 61, 62 des Sicherungselementes 6 jeweils in einer zusätzlichen Führung 66, 67 (des Mitnehmers bzw. genauer des Gleiters) geführt sind, und zwar im Beispiel konkret in der Nähe ihrer freien Endabschnitte 61a, 62a.

Die jeweilige Führung 66, 67 verläuft derart geneigt (schräg), d. h. unter einem Winkel ungleich 90°, zur Einführrichtung E, dass die Schenkel 61, 62 des Sicherungselementes beim Einführen eines Lagerelementes 45 (vergleiche Figuren 5A bis 5D) in Einführrichtung E in den Lagerbereich 43 hinein durch die jeweilige Führung 66, 67 zwangsgeführt sowohl mit einer ersten Bewegungskomponente in Einführrichtung E als auch mit einer zweiten Bewegungskomponente quer zur Einführrichtung E und weg vom Einführweg geführt werden, wenn das Lagerelement beim Einführen entlang der Einführrichtung E auf die Schenkel 61, 62 bzw. genauer deren Rastbereiche 63, 64 einwirkt. Die aus den beiden genannten Bewegungskomponenten (in Einführrichtung E einerseits sowie senkrecht hierzu nach außen andererseits) resultierende Bewegungsrichtung der Schenkel 61, 62 schräg nach außen ist in den Figuren 22A und 22B durch entsprechende Pfeile angedeutet.

Die durch die Führungen 66, 67 geführte Bewegung der Schenkel 61, 62 führt zu deren Aufspreizen an den Rastbereichen 63, 64, wodurch der Einführweg für das Einführen eines Lagerelementes in den Lagerbereich 43 freigegeben wird. Konkret ist die Orientierung der jeweiligen Führung 66, 67 vorliegend derart, dass die beiden Führungen 66, 67 entgegen der Einführrichtung E (konisch) zusammenlaufen.

Befindet sich das Lagerelement bestimmungsgemäß im Lagerbereich 43, wie z. B. in Figur 5D dargestellt, und wirkt in diesem Zustand eine Kraft auf das Lagerelement, welches die Tendenz hat, das Lagerelement entgegen der Einführrichtung E bzw. entlang einer Ausheberichtung A aus dem Lagerbereich 43 auszuheben, so führt eine hiermit einhergehende Einwirkung des Lagerelementes auf die Schenkel 61, 62 (an dem jeweiligen Rastbereich 63, 64) des Sicherungselementes 6 zu einer Verstärkung der Sicherungswirkung des Sicherungselementes 6. Denn die Schenkel 61, 62 werden hierbei (durch die Führungen 66, 67 zwangsgeführt) mit einer Komponente nach innen, d. h. in Richtung des Einführweges, gegen (End-)Anschläge 66a, 67a der Führungen 66, 67 gedrückt, wodurch die Schenkel 66, 67 in einem Zustand gehalten werden, in dem sie das Lagerelement innerhalb des Lagerbereiches 43 sichern.

Ein besonders sicheres Halten des Lagerelements wird erreicht, wenn das Zusammenwirken der Schenkel 61a, 62a in den Führungen 66, 67 - zumindest im Bereich ihrer Anschläge 66a, 67a - unter Berücksichtigung der dort herrschenden Reibungsbedingungen selbsthemmend ausgestaltet ist. Unter diesen Bedingungen muss auch bei hohen Belastungen des Lagerelements entgegen seiner Einführrichtung E nicht befürchtet werden, dass sich die Schenke 61, 62 spreizen könnten und das Lagerelement freigeben.

Figur 22C zeigt schematisch eine mögliche Abwandlung der Ausgestaltung von Führungen 66', 67', die abschnittsweise geneigt zur Einführrichtung E verlaufen. Im Unterschied zur Anordnung der Figuren 22A und 22B sind die Führungen 66', 67' gemäß Figur 22C nicht geradlinig, sondern vielmehr gekrümmt ausgeführt. An ihrem jeweiligen dem Einführweg zugewandten Endabschnitt (angrenzend an die Anschläge 66a, 67a) verlaufen jene beiden Führungen 66', 67' jeweils im Wesentlichen bzw. annähernd parallel zur Einführrichtung E; und an ihren dem Einführweg abgewandten Endabschnitten jeweils im Wesentlichen bzw. annähernd senkrecht zur Einführrichtung E. Dazwischen liegt ein gekrümmt/geneigter Verbindungsbereich der Endabschnitte.

Durch Variation der Geometrie der Führungen lassen sich diese an unterschiedliche Vorgaben anpassen, z. B. mit Blick auf eine Minimierung der Höhe h entlang des Einführweges bzw. der Einführrichtung E.

## Patentansprüche

1. Lageranordnung für eine Verstellvorrichtung eines Kraftfahrzeugs, mit
- mehreren an einer Trägerbaugruppe (1, 2) vorgesehenen Führungsbahnen (13, 21, 22), die einen Verstellweg für eine verstellbare Fensterscheibe definieren und die quer zu dem Verstellweg voneinander beabstandet sind, und
- einem Mitnehmer (3), der einerseits Mittel zur Anbindung der zu verstellenden Fensterscheibe aufweist und der andererseits mit Führungselementen (4.1, 4.2, 4.3) versehen ist, derart, dass mit den Führungsbahnen (13, 21, 22) jeweils ein Führungselement (4.1, 4.2, 4.3) des Mitnehmers (3) entlang der zugehörigen Führungsbahn beweglich in Eingriff steht,
wobei mindestens eines der Führungselemente (4.1, 4.2, 4.3) mit dem Mitnehmer (3) über ein Lagerelement (45) einer Kugelkopf-Lagerung gelenkig verbunden ist, welches durch ein im Wesentlichen U-förmiges Sicherungselement (6) formschlüssig in einem Lagerbereich (43) der Kugelkopf-Lagerung gehalten wird, wobei das Sicherungselement (6) am Lagerbereich (43) vormontiert und derart ausgestaltet und angeordnet ist, dass es beim Einführen des Lagerelementes (45) in den Lagerbereich (43) im Einführweg des Lagerelementes liegt und dabei zumindest abschnittsweise aufgespreizt bzw. weggedrückt wird, so dass ein formschlüssiger Eingriff des Sicherungselementes (6) in das Lagerelement (45) selbsttätig erfolgt, **dadurch gekennzeichnet, dass** dem Sicherungselement (6) ein Verriegelungselement (65, 165) zugeordnet ist, welches derart mit dem Sicherungselement (6) in Verbindung steht, dass es einem außer Eingriff Geraten des Sicherungselementes (6) und des Lagerelementes (45) entgegenwirkt, wobei das Verriegelungselement (65, 165) beim Einführen des Lagerelementes (45) in seine bestimmungsgemäße Position innerhalb des Lagerbereiches (43) selbsttätig in einen Zustand überführt wird, in dem es das Sicherungselement (6) verriegelt, wobei das Verriegelungselement (65) beim Einführen des Lagerelementes (45) in seine bestimmungsgemäße Position innerhalb des Lagerbereiches (43) deformiert wird, so dass es das Sicherungselement (6) verriegelt und/oder das Verriegelungselement (165) beim Einführen des Lagerelementes (45) in den Lagerbereich (43) durch Einwirkung des Lagerelementes (45) verschoben wird, so dass es das Sicherungselement (6) verriegelt.

2. Lageranordnung nach Anspruch 1, **dadurch gekennzeichnet, dass** das Lagerelement (45) zur Bildung eines Gelenkes in dem Lagerbereich (43) gelenkig gelagert ist und dass das Lagerelement (45) formschlüssig mit dem Sicherungselement (6) in Eingriff steht, wodurch das Lagerelement (45) in dem Lagerbereich (43) gehalten wird.

3. Lageranordnung nach einem der vorhergehenden Ansprüche, **dadurch gekennzeichnet, dass** das Lagerelement (45) mindestens eine Aussparung (47) aufweist, in die das Sicherungselement (6) formschlüssig eingreift.

4. Lageranordnung nach einem der vorhergehenden Ansprüche, **dadurch gekennzeichnet, dass** das Sicherungselement (6) zur Bildung des Formschlusses an mindestens zwei einander gegenüberliegenden Stellen auf das Lagerelement (45) einwirkt.

5. Lageranordnung nach einem der vorhergehenden Ansprüche, **dadurch gekennzeichnet, dass** das Sicherungselement (6) zwei Schenkel, aufweist, die mit dem Lagerelement (45) formschlüssig in Eingriff bringbar sind.

6. Lageranordnung nach einem der vorhergehenden Ansprüche, **dadurch gekennzeichnet, dass** am Sicherungselement (6) elastische Rastbereiche vorgesehen sind, die im Einführweg des Lagerelementes (45) in den Lagerbereich (43) liegen, die beim Einführen des Lagerelementes (45) in den Lagerbereich (43) zumindest abschnittsweise aus dem Einführweg wegdrückbar sind und die beim Erreichen der bestimmungsgemäßen Position des Lagerelementes (45) in dem Lagerbereich (43) zurückschnappen, so dass sie formschlüssig in das Lagerelement (45) eingreifen.

7. Lageranordnung nach einem der vorhergehenden Ansprüche, **dadurch gekennzeichnet, dass** drei Führungsbahnen (21, 22, 13) vorgesehen sind, in die jeweils ein Führungselement (4.1, 4.2, 4.3) eingreift.

8. Lageranordnung nach einem der vorhergehenden Ansprüche, **dadurch gekennzeichnet, dass** die Trägerbaugruppe (1, 2) mindestens zwei Trägerelemente (1; 2) umfasst, die an einer Mehrzahl Befestigungsstellen (120, 121, 122, 123) miteinander verbunden sind, und dass an mindestens einem der Trägerelemente (2) Befestigungsstellen (120, 121, 122, 123), über die jenes Trägerelement (2) an einem weiteren Trägerelement (1) der Trägerbaugruppe zu befestigen ist, durch Versteifungspfade (25, 26, 27, 28, 29) miteinander verbunden sind.

## Claims

1. A bearing arrangement for an adjustment device of a motor vehicle, comprising
- a plurality of guide (13, 21, 22) provided at a carrier assembly (1, 2), which define an adjustment path for an adjustable window pane and which are spaced from each other transversely to the adjustment path, and
- a driver (3) which on the one hand includes means for connection of the window pane to be adjusted and which on the other hand is provided with guiding elements (4.1, 4.2, 4.3) such that with the guide (13, 21, 22) a guiding element (4.1, 4.2, 4.3) of the driver (3) each is movably in engagement along the associated guide,
wherein at least one of the guiding elements (4.1, 4.2, 4.3) is pivotally connected with the driver (3) via a bearing element (45) of a ball head bearing, which is positively held in a bearing region (43) of the ball head bearing by a substantially U-shaped securing element (6),
wherein the securing g element (6) is premounted on the bearing region (43) and is designed and arranged such that during insertion of the bearing element (45) into the bearing region (43) it lies in the insertion path of the bearing element and in the process is at least partly spread apart or pressed away, such that a positive engagement of the securing element (6) into the bearing element (45) is effected automatically,
**characterized in that**
to the securing element (6) a locking element (65, 165) is associated, which is connected with the securing element (6) such that it counteracts getting out of engagement of the securing element (6) and of the bearing element (45), wherein during insertion of the bearing element (45) into its proper position inside the bearing region (43) the locking element (65, 165) is automatically transferred into a condition in which it locks the securing element (6), wherein during insertion of the bearing element (45) into its proper position inside the bearing region (43) the locking element (65) is deformed, so that it locks the securing element (6) and/or during insertion of the bearing element (45) into its proper position inside the bearing region (43) the locking element (65) is deformed, so that it locks the securing element (6).

2. The bearing arrangement according to claim 1, **characterized in that** for forming a joint the bearing element (45) is pivotally mounted in the bearing region (43), and that the bearing element (45) positively is in engagement with the securing element (6), whereby the bearing element (45) is held in the bearing region (43).

3. The bearing arrangement according to any of the preceding claims, **characterized in that** the bearing element (45) includes at least one cutout (47) into which the securing element (6) positively engages.

4. The bearing arrangement according to any of the preceding claims, **characterized in that** for forming the positive connection the securing element (6) acts on the bearing element (45) on at least two points located opposite each other.

5. The bearing arrangement according to any of the preceding claims, **characterized in that** the securing element (6) includes two legs which can positively be brought in engagement with the bearing element (45).

6. The bearing arrangement according to any of the preceding claims, **characterized in that** at the securing element (6) elastic latching regions are provided, which lie in the insertion path of the bearing element (45) into the bearing region (43), which during insertion of the bearing element (45) into the bearing region (43) can at least partly be urged away from the insertion path, and which snap back on reaching the proper position of the bearing element (45) in the bearing region (43), so that they positively engage into the bearing element (45).

7. The bearing arrangement according to any of the preceding claims, **characterized in that** three guide (21, 22, 13) are provided, into each of which a guiding element (4.1, 4.2, 4.3) engages.

8. The bearing arrangement according to any of the preceding claims, **characterized in that** the carrier assembly (1, 2) comprises at least two carrier elements (1; 2) which are connected with each other at a plurality of fastening points (120, 121, 122, 123), and that on at least one of the carrier elements (2) fastening points (120, 121, 122, 123) via which that carrier element (2) is to be attached to a further carrier element (1) of the carrier assembly are connected with each other by stiffening paths (25, 26, 27, 28, 29).

## Revendications

1. Ensemble d'appui pour un dispositif de réglage d'un véhicule automobile avec
- plusieurs bandes de guidage (13, 21, 22) prévues sur un ensemble de support (1, 2) qui définissent une course de réglage pour une vitre de fenêtre réglable et qui sont espacées les unes des autres transversalement à la course de réglage, et
- un élément d'entraînement (3) qui présente d'une part des moyens pour la liaison avec la vitre de fenêtre à régler et qui est pourvu d'autre part d'éléments de guidage (4.1, 4.2, 4.3) de telle manière qu'avec les bandes de guidage (13, 21, 22), respectivement un élément de guidage (4.1, 4.2, 4.3) de l'élément d'entraînement (3) se trouve en engagement de manière mobile le long de la bande de guidage correspondante,
dans lequel au moins un des éléments de guidage (4.1, 4.2, 4.3) est relié par articulation à l'élément d'entraînement (3) par un élément d'appui (45) d'un logement à tête sphérique, qui est maintenu par un élément de fixation (6) sensiblement en forme de U à complémentarité de formes dans une zone d'appui (43) du logement à tête sphérique,
dans lequel l'élément de fixation (6) est prémonté sur la zone d'appui (43) et configuré et agencé de telle manière qu'il se trouve lors de l'introduction de l'élément d'appui (45) dans la zone d'appui (43) dans la course d'introduction de l'élément d'appui et est écarté ou repoussé au moins par sections de sorte qu'un engagement à complémentarité de formes de l'élément de fixation (6) dans l'élément d'appui (45) soit effectué automatiquement, **caractérisé en ce que**
un élément de verrouillage (65, 165) est associé à l'élément de fixation (6) qui est en liaison avec l'élément de fixation (6) de telle manière qu'il agisse contre une mise hors engagement de l'élément de fixation (6) et de l'élément d'appui (45), dans lequel l'élément de verrouillage (65, 165) est automatiquement transféré lors de l'introduction de l'élément d'appui (45) dans sa position conforme aux dispositions dans la zone d'appui (43) dans un état, dans lequel il verrouille l'élément de fixation (6), dans lequel
l'élément de verrouillage (65) est déformé lors de l'introduction de l'élément d'appui (45) dans sa position conforme aux dispositions dans la zone d'appui (43) de sorte qu'il verrouille l'élément de fixation (6) et/ou l'élément de verrouillage (165) est déplacé lors de l'introduction de l'élément d'appui (45) dans la zone d'appui (43) par action de l'élément d'appui (45) de sorte qu'il verrouille l'élément de fixation (6).

2. Agencement d'appui selon la revendication 1, **caractérisé en ce que** l'élément d'appui (45) est logé par articulation pour la formation d'une articulation dans la zone d'appui (43) et **en ce que** l'élément d'appui (45) est en engagement par complémentarité de formes avec l'élément de fixation (6), par quoi l'élément d'appui (45) est maintenu dans la zone d'appui (43).

3. Agencement d'appui selon l'une des revendications précédentes, **caractérisé en ce que** l'élément d'appui (45) présente au moins un évidement (47), dans lequel l'élément de fixation (6) s'engage par complémentarité de formes.

4. Agencement d'appui selon l'une des revendications précédentes, **caractérisé en ce que** l'élément de fixation (6) agit pour la formation de la complémentarité de formes à au moins deux endroits opposés l'un à l'autre sur l'élément d'appui (45).

5. Agencement d'appui selon l'une des revendications précédentes, **caractérisé en ce que** l'élément de fixation (6) présente deux branches qui peuvent être amenées en engagement par complémentarité de formes avec l'élément d'appui (45).

6. Agencement d'appui selon l'une des revendications précédentes, **caractérisé en ce que** des zones d'encliquetage élastiques sont prévues sur l'élément de fixation (6), lesquelles se trouvent dans la course d'introduction de l'élément d'appui (45) dans la zone d'appui (43), lesquelles peuvent être repoussées lors de l'introduction de l'élément d'appui (45) dans la zone d'appui (43) au moins par sections hors de la course d'introduction et lesquelles se détendent lors de l'atteinte de la position conforme aux dispositions de l'élément d'appui (45) dans la zone d'appui (43) de sorte qu'elles s'engagent par complémentarité de formes dans l'élément d'appui (45).

7. Agencement d'appui selon l'une des revendications précédentes, **caractérisé en ce que** trois bandes de guidage (21, 22, 13) sont prévues, dans lesquelles respectivement un élément de guidage (4.1, 4.2, 4.3) s'engage.

8. Agencement d'appui selon l'une des revendications précédentes, **caractérisé en ce que** l'ensemble de support (1,2) comporte au moins deux éléments de support (1 ; 2) qui sont reliés l'un à l'autre sur une pluralité de points de fixation (120, 121, 122, 123) et **en ce que** sur au moins un des éléments de support (2), des points de fixation (120, 121, 122, 123), par lesquels chaque élément de support (2) doit être fixé sur un autre élément de support (1) de l'ensemble de support, sont reliés les uns aux autres par des voies de renforcement (25, 26, 27, 28, 29).
